(19) Europäisches Patentamt
European Patent Office
Office européen des brevets

(11) Veröffentlichungsnummer: **0 010 692**
**B1**

(12) **EUROPÄISCHE PATENTSCHRIFT**

(45) Veröffentlichungstag der Patentschrift: **23.06.82.**

(51) Int. Cl.³: **C 07 C 125/065,** C 07 C 125/067, C 07 C 149/437, C 07 C 155/02, C 07 C 155/08, A 01 N 47/20

(21) Anmeldenummer: **79104021.5**

(22) Anmeldetag: **18.10.79**

(54) **Neue m-Anilidurethane, sie enthaltende Herbizide und Verfahren zu deren Herstellung, sowie Verfahren zur Bekämpfung von unerwünschtem Pflanzenwuchs.**

(30) Priorität: **26.10.78 DE 2846625**

(43) Veröffentlichungstag der Anmeldung: **14.05.80 Patentblatt 80/10**

(45) Bekanntmachung des Hinweises auf die Patenterteilung: **23.06.82 Patentblatt 82/25**

(84) Benannte Vertragsstaaten: **AT BE CH DE FR GB IT LU NL SE**

(56) Entgegenhaltungen:
**DE-A-2 124 037**
**DE-A1-2 703 838**
**US-A-3 847 587**
**US-A-3 941 581**

(73) Patentinhaber: **BASF Aktiengesellschaft, Carl-Bosch-Strasse 38, D-6700 Ludwigshafen (DE)**

(72) Erfinder: **Rohr, Wolfgang, Dr. Dipl.-Chem., Gontardstrasse 4, D-6800 Mannheim 1 (DE)**
Erfinder: **Schirmer, Ulrich, Dr. Dipl.-Chem., Berghalde 79, D-6900 Heidelberg 1 (DE)**
Erfinder: **Wuerzer, Bruno, Dr., Ruedigerstrasse 13, D-6701 Otterstadt (DE)**

EP 0 010 692 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Neue m-Anilidurethane, sie enthaltende Herbizide und Verfahren zu deren Herstellung, sowie Verfahren zur Bekämpfung von unerwünschtem Pflanzenwuchs

Die vorliegende Erfindung betrifft neue m-Anilidurethane, Verfahren zur Herstellung dieser m-Anilidurethane, Herbizide, welche diese Verbindungen enthalten, sowie Verfahren zur Bekämpfung unerwünschten Pflanzenwuchses mit diesen Verbindungen.

Es ist bekannt, daß wichtige herbizide Handelsprodukte wie 3-Isopropyl-2,1,3-benzothiadiazinon-(4)-2,2-dioxid trotz hervorragender Aktivität gegen viele Unkruat-Arten noch nennenswerte Wirkungslücken gegen bedeutsame unerwünschte Pflanzen aufweisen (DE-PS 1 542 836). Demgegenüber sind m-Anilidoharnstoffe, z. B. 2,4-Dichlorphenoxyessigsäure-(3'-(N'-methylureido)-anilid zwar etwas breiter im Wirkungsspektrum, indem sie sowohl breitblättrige wie auch grasartige Unkräuter bekämpfen. Eine ausgeprägte Toleranz für Kulturpflanzen und somit ein Hinweis auf Verwendung als selektive herbizide Mittel ist aber aus der Literatur nicht zu entnehmen (DE-AS 1 793 226).

Aus US-PS 3 979 202 sind zahlreiche 3'-(Carbamoyloxy)-anilide, z. B. das 3'-N-Isopropyl-carbamoyloxy-propionanilid mit recht divergierender herbizider Wirksamkeit gegenüber höheren Pflanzen bekannt. Dies gilt sowohl für die Wirkungsrichtung als Herbizide oder Mittel für die Längenwuchshemmung wie auch für die Aufwandmengen von 0,1 lbs.Wirkstoff/acre bis 10 lbs./acre, um solche Wirkungen zu erzielen.

Es ist ferner bekannt, Anilidurethane (US-PS 3 941 581) oder Diurethane (DE-OS 2 703 838) als Herbizide zu verwenden. Hierdurch werden die neuen Verbindungen jedoch nicht nahegelegt.

Es wurde nun gefunden, daß m-Anilidurethane der Formel I

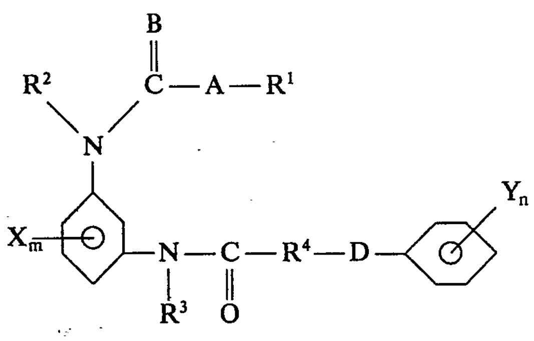

(I)

in der

A, B und D unabhängig voneinander Sauerstoff oder Schwefel

$R^1$ gegebenenfalls durch Halogen oder Alkoxy oder Alkoxycarbonyl oder Cyan substituiertes Alkyl oder gegebenenfalls durch Halogen substituiertes Alkenyl oder gegebenenfalls durch Halogen oder Alkoxy substituiertes Alkinyl oder gegebenenfalls durch Alkyl substituiertes Cycloalkyl oder Aryl

$R^2$ und $R^3$ jeweils unabhängig voneinander Wasserstoff, Alkyl, Alkoxyalkyl, Halogenalkyl

$R^4$ einen gegebenenfalls durch Alkyl, Alkoxyalkyl oder Halogenalkyl substituierten Alkylenrest mit 1 bis 6 Kohlenstoffatomen

X Wasserstoff, Alkyl, Halogenalkyl, Alkoxy, Halogen, Nitro oder Amino

Y Wasserstoff, Alkyl, Halogenalkyl, Alkoxyalkyl, Cycloalkyl, Aralkyl, Halogen, eine Alkylenkette, die mit dem Benzolring zu einem gegebenenfalls substituierten Napthylring kondensiert ist, Alkoxy, Halogenalkoxy, Alkylthio, Nitro, Aryl, Thiocyanato,

Cyano 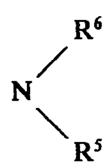 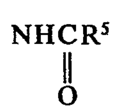 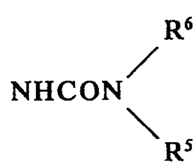 $COOR^5$ 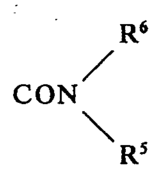

$SO_2R^5$ $OSO_2R^5$ $COR^5$ 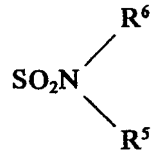

wobei $R^5$ und $R^6$ jeweils unabhängig voneinander Wasserstoff bedeutet oder die für $R^1$ genannte Bedeutung haben,

m die Zahlen 1–4 und n die Zahlen 1–5 bedeuten,

eine gute herbizide Wirkung gegen zahlreiche wichtige unerwünschte Pflanzen haben. Dabei werden sie von verschiedenen Kulturpflanzen schadlos oder mit nur unwesentlichen Schädigungen vertragen.

Die in der allgemeinen Formel angeführten Reste können beispielsweise folgende Bedeutungen haben:

$R^1$ unsubstituiertes Alkyl oder durch Halogen oder Alkoxy oder Alkoxycarbonyl oder Cyan substituiertes Alkyl (z. B. Methyl, Äthyl, 2-Chloräthyl, 2-Methoxyäthyl, Methoxycarbonylmethyl, Isopropyl, n-Propyl, n-Butyl, sec.-Butyl, tert.-Butyl, iso-Butyl, Cyanomethyl) oder gegebenenfalls durch Halogen substituiertes Alkenyl (z. B. Allyl, 2-Chlorpropen(1)yl(3), Buten(1)yl(3)), oder gegebenenfalls durch Halogen oder Alkoxy substituiertes Alkinyl (z. B. Propargyl, Butin(1)yl(3), 1-Chlorbutin(2)yl(4)) oder gegebenenfalls durch Alkyl substituiertes Cycloalkyl (z. B. Cyclopentyl, Cyclohexyl, 3-Methylcyclohexyl, 2,6-Dimethylcyclohexyl, Cycloheptyl, 4-tert.-Butyl-cyclohexyl) oder Aryl (z. B. Phenyl)

$R^2$ und $R^3$ jeweils unabhängig voneinander Wasserstoff, Alkyl (z. B. Methyl, Äthyl, iso-Propyl), Alkoxyalkyl (z. B. Methoxymethyl, 2-Methoxyäthyl) Halogenalkyl (z. B. Chlormethyl, 2-Chloräthyl)

$R^4$ einen gegebenenfalls durch Alkyl, Alkoxyalkyl oder Halogenalkyl substituierten Alkylenrest mit 1 bis 6 Kohlenstoffatomen (z. B. Methylen, Methylmethylen, Dimethylmethylen, Propylen, Hexylen, Chlormethylmethylen, Methoxymethylmethylen, Äthylmethylen, Methyläthylen, Isopropylmethylen, 1-Chlormethyläthylen, Methoxymethylmethylen, 2-Chloräthylmethylen, Diäthylmethylen, Äthylen, Methylpropylen, Butylen, Dimethyläthylen, Propylmethylen)

X Wasserstoff, Alkyl (z. B. Methyl), Halogenalkyl (z. B. Trifluormethyl), Alkoxy (z. B. Methoxy), Halogen (z. B. Fluor, Chlor, Brom oder Jod), Nitro oder Amino

Y Wasserstoff, Alkyl (z. B. Methyl, Isopropyl), Halogenalkyl (z. B. Trifluormethyl), Alkoxyalkyl (z. B. Methoxymethyl), Cycloalkyl (z. B. Cyclohexyl), Aralkyl (z. B. Benzyl), Halogen (z. B. Fluor, Chlor, Brom oder Jod), eine Alkenylkette, die mit dem Benzolring zu einem gegebenenfalls substituierten Naphthylring kondensiert ist, Alkoxy (z. B. Methoxy) Halogenalkoxy (z. B. Trifluormethoxy), Alkylthio (z. B. Methylthio), Nitro, Aryl (z. B. Phenyl), Thiocyanato, Cyano,

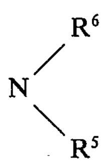 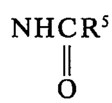 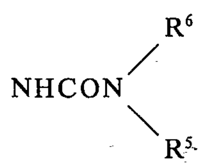 $COOR^5$ 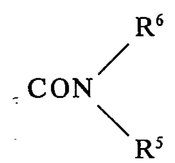 $SO_2R^5$

$COR^5$ $OSO_2R^5$ 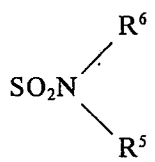

wobei $R^5$ und $R^6$ jeweils unabhängig voneinander Wasserstoff bedeutet oder die für $R^1$ genannte Bedeutung hat.

Die neuen Verbindungen können beispielsweise nach folgenden Verfahren hergestellt werden, wobei die Reste A, B, D, $R^1$, $R^2$, $R^3$, $R^4$, X, Y, m und n die oben angegebene Bedeutung haben. Wenn im Folgenden von Urethanen und Chlorameisensäureestern die Rede ist, sollen unter diesen beiden Sammelbegriffen auch Thiono-, Thio- und Dithiourethane sowie Chlorameisensäurethionoester, Chlorameisensäurethioester und Chlorameisensäuredithioester verstanden werden.

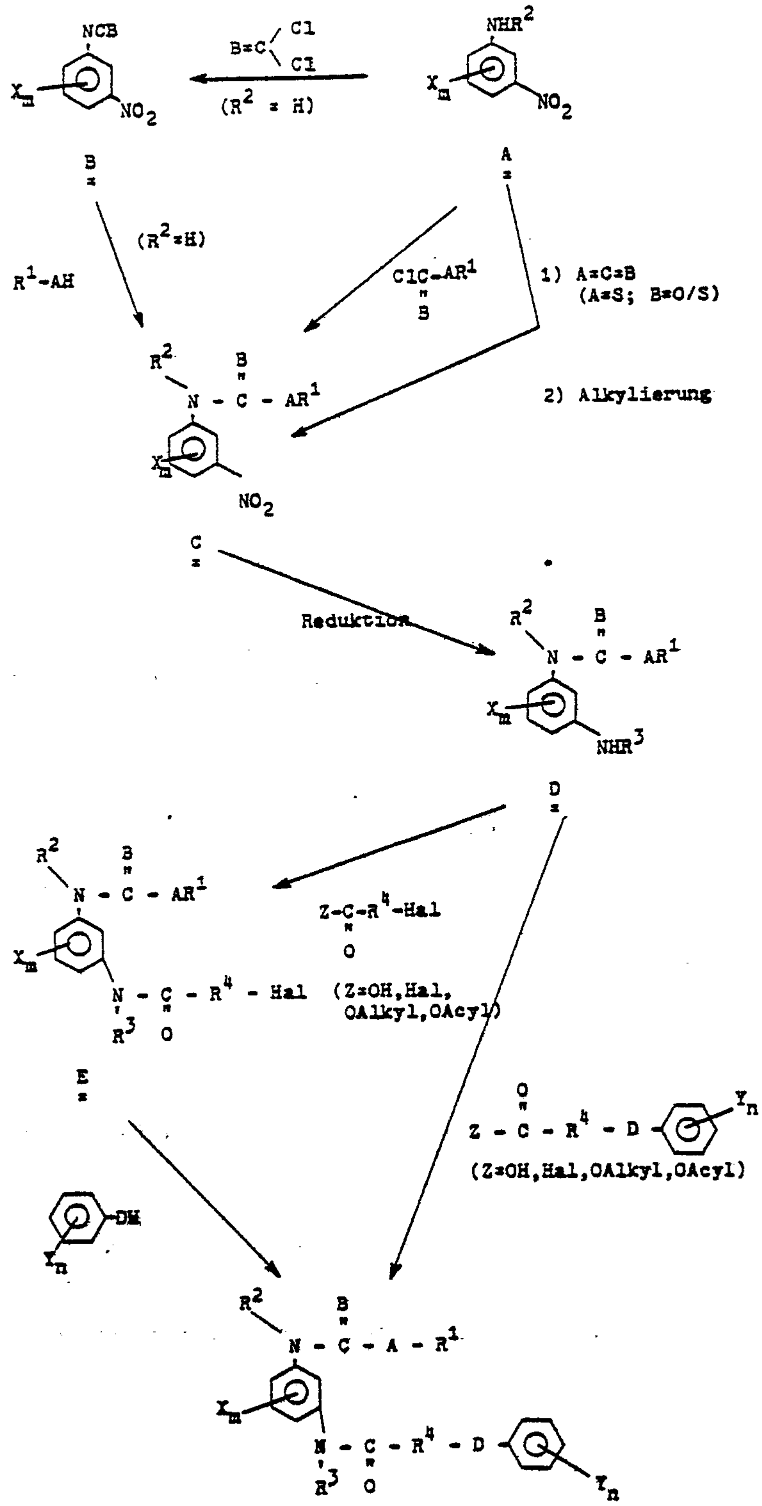
(R² = H)
(R²=H)
1) A=C=B
(A=S; B=O/S)
2) Alkylierung
Reduktion
(Z=OH,Hal,
OAlkyl,OAcyl)
(Z=OH,Hal,OAlkyl,OAcyl)

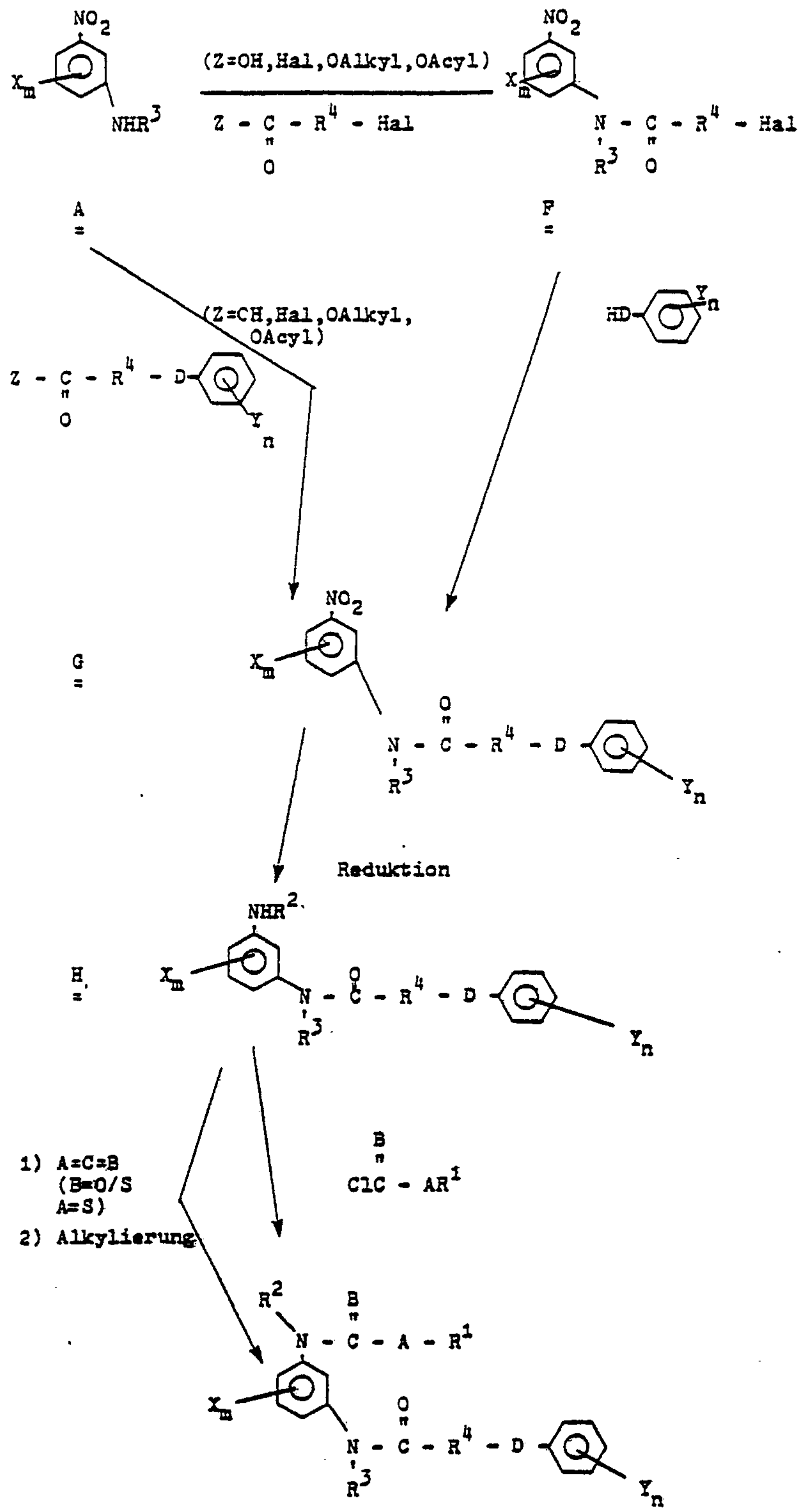
(Z=OH,Hal,OAlkyl,OAcyl)
A
F
(Z=CH,Hal,OAlkyl,
OAcyl)
G
Reduktion
H
1) A=C=B
(B=O/S
A=S)
2) Alkylierung

Aus den aufgezeigten Reaktionsschemata gehen eindeutig die wechselseitigen Beziehungen zwischen den Ausgangsstoffen hervor. Weiterhin wird deutlich, daß je nach Natur der Substituenten A, B, D, $R^1$, $R^2$, $R^3$, $R^4$, X und Y sowie der Verfügbarkeit der jeweiligen Reaktionspartner der eine oder andere Weg vorteilhaft sein kann.

Ausgehend von bekannten meta-Nitranilinen (A) lassen sich meta-Nitrophenyl-iso(thio)cyanate (B) herstellen (W. Siefken, J. Liebigs Annalen der Chemie 562, 75 ff, (1949)), die ihrerseits mit den Komponenten $R^1-AH$ glatt zu den Nitro(thio)urethanen (C) reagieren (S. Petersen in Methoden der Organ. Chemie, Band VIII, Seite 131, Georg-Thieme-Verlag, Stuttgart, 4. Auflage, (1952)), die allerdings auch direkt aus den meta-Nitranilinen (A) mit Chlorameisensäureestern ($R^1A-CB-Cl$) (DE-OS 1 643 763) oder mit Schwefelkohlenstoff bzw. Kohlenoxysulfid, Base und Alkylierungsmittel (Methoden der Organ. Chemie, Band IX, Seite 831 ff., Georg-Thieme-Verlag, Stuttgart, 4 Auflage, 1955)) zugänglich sind. Nachfolgende Reduktion führt zu den Aminourethanen (D, $R^3=H$) (S. Schröter in Methoden der Organ. Chemie, Band XI/1, Seite 350 ff, Georg-Thieme-Verlag, Stuttgart, 4. Auflage 1957) die entweder direkt oder nach erfolgter Umwandlung in das am Aminostickstoff monosubstituierte Produkt (D, $R^3\neq H$) (Methoden der Organ. Chemie, Band XI/1, Seite 24 ff, Georg-Thieme-Verlag Stuttgart, 4. Auflage 1957) mit Phenoxycarbonsäuren, -säurehalogeniden, -säureestern oder -säureanhydriden zu den erfindungsgemäßen m-Anilidurethanen acyliert werden (Methoden der Organ. Chemie, Band XI/2, Seite 3 ff, Georg-Thieme-Verlag, Stuttgart, 4. Auflage, 1958).

Die Aminourethane (D) lassen sich auch zuerst mit einer Halogencarbonsäure, -säurehalogenid, -säureester oder -säureanhydrid zu den m-Anilidurethanen (E) umsetzen, die dann mit Phenolen oder Thiophenolen zu den erfindungsgemäßen m-Anilidurethanen reagieren (Methoden der Organ. Chemie, Band VI/3, Seite 54 ff, Georg-Thieme-Verlag, Stuttgart, 4. Auflage 1965).

Eine weitere Synthesemöglichkeit besteht in der Reaktion der m-Nitroaniline (A) mit Phenoxycarbonsäure, -säurehalogenide, -säureestern oder -säureanhydriden zu den m-Nitroaniliden (G), die auch über die Nitrohalogenide (F) zugänglich sind.

Die Reduktion der m-Nitroanilide (G) führt zu den m-Aminoaniliden (H, $R^2=H$), die entweder direkt oder nach erfolgter Umwandlung in das am Aminostickstoff monosubstituierte Produkt (H, $R^2\neq H$) mit Chlorameisensäureestern ($R^1ACB-Cl$) oder mit Schwefelkohlenstoff bzw. Kohlenoxysulfid, Base und Alkylierungsmittel zu den erfindungsgemäßen m-Anilidurethanen umgesetzt werden.

Nachfolgend werden die bevorzugten Syntheseschritte genauer beschrieben:

a) Die Umsetzung von 3-Nitrophenyliso(thio)cyanaten (B) erfolgt mit oder ohne einem für Iso(thio)cyanatreaktionen gebräuchlichen Katalysator, z. B. tert. Amine (Triäthylamin, 1,4-Diazabicyclo-(2,2,2)-octan), stickstoffhaltige Heterocyclen (Pyridin, 1,2-Dimethylimid-azol) oder organische Zinnverbindungen (Dibutyl-zinndiacetat, Dimethylzinndichlorid) gegebenenfalls in einem unter den Reaktionsbedingungen inerten Lösungsmittel, z. B. Kohlenwasserstoffe (Ligroin, Benzin, Toluol, Pentan, Cyclohexan), Halogenkohlenwasserstoffe (Methylenchlorid, Chloroform, Dichloräthan, Chlorbenzol, o-, m- oder p-Dichlorbenzol), Nitrokohlenwasserstoffe (Nitrobenzol, Nitromethan), Nitrile (Acetonitril, Butyronitril, Benzonitril), Äther (Di-äthyläther, Tetrahydrofuran, Dioxan), Ester (Essigsäureäthylester, Propionsäuremethylester), Ketone (Aceton, Methyläthylketon) oder Amide (Dimethylformamid, Formamid) (DE-OS 1 568 138) bei Temperaturen im Bereich von 0–150° C, vorzugsweise im Bereich von 40–100° C.

b) 3-Nitraniline (A) bzw. 3-Aminoanilide (H) werden mit Chlorameisensäureester in einem geeigneten Lösungsmittel, z. B. Wasser, Alkohole (Methanol, Äthanol, Isopropanol) oder wie unter a) angegeben, unter Zuhilfenahme eines üblichen Säurebinders, z. B. Alkalihydroxide, -carbonate, -hydrogencarbonate, Erdalkalioxide, -hydroxide, -carbonate, -hydrogencarbonate, tertiäre organische Basen (z. B. Triäthylamin, Pyridin, N,N-Dimethylamin, N,N-Dimethylcyclohexylamin, Chinolin, Tributylamin) oder Ausgangsprodukt 3-Nitranilin, bei Temperaturen von –20° bis 150° C, vorzugsweise im Bereich von 20 bis 80° C umgesetzt.

c) Die Reduktion der Nitrourethane (C) bzw. Nitroanilide kann nach einem der bekannten Verfahren durchgeführt werden, beispielsweise durch katalytische Hydrierung, durch eine Metall-Säure-Kombination, z. B. eine Kombination Eisen-Säure, durch eine Metall-Alkohol-Kombination, z. B. Zinkstaub-wäßriger Alkohol, Eisen-wäßriger Alkohol.

d) 3-Nitroaniline (A) bzw. Aminourethane (D) werden mit Phenoxycarbonsäurehalogeniden bzw. mit Halogencarbonsäurehalogeniden in einem geeigneten Lösungsmittel, unter Zuhilfenahme eines üblichen Säurebinders, wie unter a) angegeben, bei Temperaturen von –20 bis 150°C, vorzugsweise bei 0–60° C umgesetzt.

Statt den Säurehalogeniden lassen sich auch die Säuren selbst einsetzen, wenn man diese mit einem aliphatischen Carbodiimid, z. B. Dicyclohexylcarbondiimid, aktiviert. Von den unter a) angegebenen Lösungsmitteln eignen sich Äther, z. B. Tetrahydrofuran, besonders gut, wobei vorzugsweise im Bereich von 0–60° C gearbeitet wird.

Die Reaktion der 3-Nitraniline (A) bzw. Aminourethane (D) mit Phenoxycarbonsäureestern führt man entweder ohne Lösungsmittel oder mit einem indifferenten Lösungsmittel wie Kohlenwasserstoffe (Toluol), Halogenkohlenwasserstoffe (Dichlorbenzol) oder Amide (Dimethylformamid) bei Temperaturen von 50 – 180° C, vorzugsweise bei 80 – 150° C durch.

e) Die Halogenamidurethane (E) bzw. die Nitrohalogenamide (F) werden entweder mit Alkali(thio)phenolaten in einem indifferenten Lösungsmittel wie unter a) angegeben oder mit feingepulvertem Kaliumcarbonat und (Thio)phenol in einem Keton (Aceton, Methyläthylketon) bei Temperaturen im Bereich von 0 bis 150° C, vorzugsweise im Bereich von 40 – 100° C umgesetzt.

Die folgenden Beispiele sollen die Herstellung der neuen m-Anilidurethane und ihrer Vorprodukte erläutern:

## I. Nitrourethane

### Beispiel A

Zu 138 Gew.-Teilen m-Nitranilin in 500 Gew.-Teilen Tetrahydrofuran (THF) werden 87 Gew.-Teile Natriumhydrogencarbonat gegeben. Unter Rühren tropft man bei Raumtemperatur 120 Gew.-Teile Chlorameisensäurethiomethylester zu, läßt 16 Stunden bei Raumtemperatur nachrühren, filtriert, destilliert das Lösungsmittel am Rotationsverdampfer ab und rührt das erhaltene Öl in Toluol ein. Die sich abscheidenden Kristalle werden abgesaugt und getrocknet.
Fp.: 137 – 138° C.
Die Verbindung hat folgende Strukturformel:

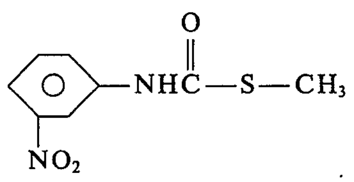

### Beispiel B

Zu 112 Gew.-Teilen 3-Nitrophenylisocyanat in 600 Gew.-Teilen Toluol werden 51 Gew.-Teile tert. Butanol gegeben. Nach 4 Stunden gibt man einige Tropfen Triäthylamin zu und läßt 48 Stunden stehen. Nach dem Abziehen des Lösungsmittels im Vakuum erhält man weiße Kristalle.
Fp.: 97 – 99° C.
Die Verbindung hat folgende Strukturformel:

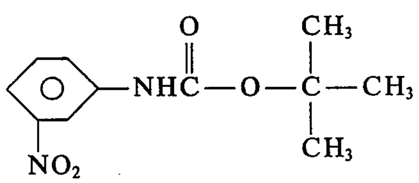

Nach entsprechenden Verfahren können folgende Nitrourethane (C) hergestellt werden:

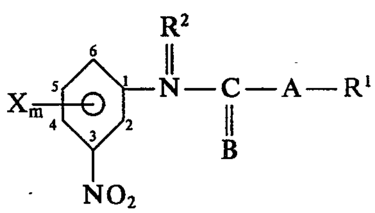

| A | B | X | $R^1$ | $R^2$ | Fp. °C |
|---|---|---|---|---|---|
| O | O | H | $CH_3$ | H | 153–155 |
| O | S | H | $CH_3$ | H | |
| O | O | 6-$CH_3$ | $CH_3$ | H | 132–133 |
| O | O | H | Phenyl | H | 123–125 |
| O | O | H | Phenyl | $CH_3$ | 69– 70 |
| O | O | 6-F | Phenyl | H | 138–140 |
| O | O | 5-$CF_3$ | $CH_3$ | H | 86– 87 |
| O | O | 6-$CH_3$ | $C_2H_5$ | H | 131–133 |
| O | O | H | $C_2H_5$ | H | 64– 66 |
| O | O | 2-$CH_3$ | Phenyl | H | 112–114 |
| O | O | 4-$CH_3$ | $CH_3$ | H | 114–117 |
| O | O | H | Cyclooctyl | H | 103–105 |
| O | O | H | $CH_2COOCH_3$ | H | 123–125 |
| O | O | 5-$CF_3$ | $CH(CH_3)_2$ | H | 121–123 |
| O | O | H | $CH_3$ | $CH_3$ | 58– 61 |
| O | O | H | 3,5-Dimethylcyclohexyl | H | 128–129 |
| O | O | H | $CH(CH_3)_2$ | H | 86– 88 |
| O | O | 6 F | $CH_3$ | H | 116–118 |
| O | O | 4 Cl | Phenyl | H | 125–127 |
| O | O | 4 Cl | $CH_3$ | H | 122–124 |
| O | O | 4-$CH_3$ | $C_2H_5$ | H | 80– 81 |
| O | O | H | 1-Methylcyclopentyl | H | 57– 59 |
| O | O | 5-$CF_3$ | Phenyl | H | 133–135 |
| O | O | H | 2,6-Dimethylcyclohexyl | H | 121–123 |
| O | O | 6 $OCH_3$ | $CH_3$ | H | 134–136 |
| O | O | H | Cycloheptyl | H | 102–104 |
| O | O | 6 $OCH_3$ | Phenyl | H | 209–211 |
| O | S | H | Phenyl | H | |
| O | O | H | Cyclopentyl | H | 110–112 |
| O | O | 6 Cl | $CH_3$ | H | 136–138 |
| O | O | H | 3-Methylcyclohexyl | H | 120–122 |

| A | B | X | $R^1$ | $R^2$ | Fp. °C |
|---|---|---|---|---|---|
| S | S | H | $CH_3$ | H | |
| S | O | H | $C(CH_3)_3$ | H | |
| S | O | H | $C_2H_5$ | H | |
| S | O | H | Phenyl | H | 156–158 |
| O | O | $C_2H_5$ | Phenyl | H | 56– 58 |
| O | O | H | $C(CH_3)_2C_2H_5$ | H | 62– 63 |
| O | O | H | $CH(CH_2OCH_3)_2$ | H | 95– 96 |
| O | O | H | Cyclohexyl | H | 117–118 |

## II. Aminourethane

### Beispiel C

Zu einer auf 80° C erwärmten Mischung aus 33 Gew.-Teilen Eisenpulver, 75 Gew.-Teilen Alkohol, 60 Gew.-Teilen Wasser und 3 Gew.-Teilen konz. Salzsäure gibt man unter intensivem Rühren 40 Gew.-Teile 3(S-Methylthiocarbamoyl)-nitro-benzol in solchen Portionen, daß die Temperatur ohne zusätzliche Heizung auf 80° C gehalten wird. Danach kocht man noch 1 Stunde am Rückfluß, saugt heiß ab, digeriert den Rückstand und das Filtrat mit etwa 1000 Gew.-Teilen Methylenchlorid, trocknet über Natriumsulfat, engt ein und kristallisiert aus Toluol um: Fp.: 101 – 103° C.

Struktur:

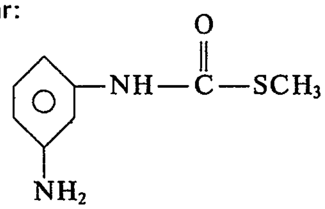

Nach entsprechenden Verfahren können folgende Aminourethane (D) hergestellt werden:

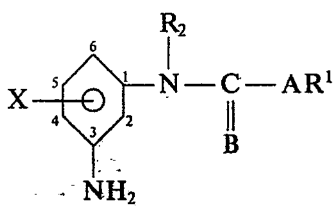

| A | B | X | $R^1$ | $R^2$ | Fp. °C |
|---|---|---|---|---|---|
| O | O | H | $CH_3$ | H | 87– 89 |
| O | O | 6 $CH_3$ | $CH_3$ | H | |
| O | O | H | Phenyl | $CH_3$ | 70– 72 |
| O | O | 4 F | $CH_3$ | H | |
| O | S | H | $CH_3$ | H | |
| S | O | H | $C_2H_5$ | H | |

Fortsetzung

| A | B | X | $R^1$ | $R^2$ | Fp. °C |
|---|---|---|---|---|---|
| O | S | H | Phenyl | H | |
| O | O | 5 $CF_3$ | $CH_3$ | H | zähes Öl |
| O | O | H | $C_2H_5$ | H | zähes Öl |
| O | O | 2 $CH_3$ | Phenyl | H | 131–133 |
| O | O | 4 $CH_3$ | $CH_3$ | H | |
| O | O | 4 Cl | Phenyl | H | 215–217 |
| O | O | 4 Cl | $CH_3$ | H | |
| O | O | 4 $CH_3$ | $C_2H_5$ | H | |
| S | S | H | Phenyl | H | |
| O | O | H | 3,3,5-Trimethylcyclohexyl | H | 100–102 |
| O | O | H | Phenyl | $C_2H_5$ | 104–106 |
| O | O | H | Cyclopentyl | H | |
| O | O | 5-$CF_3$ | Phenyl | H | 214–216 |
| O | O | H | Phenyl | H | 178–180 |
| O | O | H | 1-Methylcyclopentyl | H | |
| O | O | H | Hexahydrobenzyl | H | 106–108 |
| O | Q | 6 $OCH_3$ | $CH_3$ | H | 85– 87 |
| O | O | H | Cycloheptyl | H | 86– 88 |
| O | O | 6 $OCH_3$ | Phenyl | H | 84– 86 |
| O | O | 6 Cl | $CH_3$ | H | |
| O | O | H | 3-Methylcyclohexyl | H | 95– 97 |
| O | O | H | $CH_2COOCH_3$ | H | zähes Öl |
| S | S | H | $CH_3$ | H | |
| O | O | H | $C(CH_3)_3$ | H | 109–110 |
| O | O | 5-$CF_3$ | $CH(CH_3)_2$ | H | 102–104 |
| O | O | H | $CH_3$ | $CH_3$ | 89– 92 |
| O | O | H | 3,5-Dimethylcyclohexyl | H | 80– 82 |
| O | O | H | $CH(CH_3)_2$ | H | 66– 68 |
| O | O | 4 F | $CH_3$ | H | |
| O | O | H | $C(CH_3)_2C_2H_5$ | H | 65– 67 |
| O | O | H | Cyclohexyl | H | 122–124 |

III. Nitrohalogenamide und Halogenamidurethane

Beispiel D

Zu 138 Gew.-Teilen 3-Nitroanilin in 1500 Gew.-Teilen Essigsäureäthylester werden 126 Gew.-Teile Natriumhydrogencarbonat gegeben. Unter Rühren tropft man bei 0–10°C 216 Gew.-Teile 2-Brompropionsäurebromid zu, läßt 16 Stunden bei Raumtemperatur nachrühren, filtriert, engt ein und wäscht die erhaltenen Kristalle mit Toluol: Fp.: 99–101°C. Die Verbindung hat folgende Strukturformel (vgl. F)

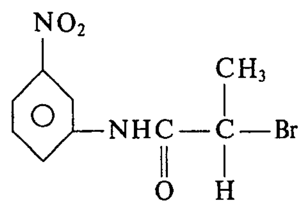

Nach entsprechenden Verfahren können folgende Halogenamidurethane (E) hergestellt werden:

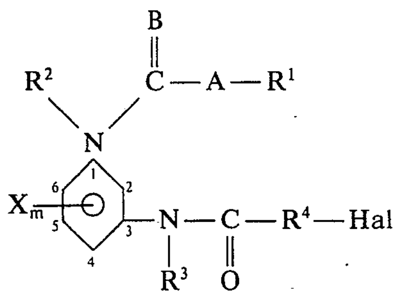

| A | B | X | $R^2$ | $R^1$ | $R^3$ | $R^4$ | Hal | Fp. °C |
|---|---|---|---|---|---|---|---|---|
| O | O | H | H | Methyl | H | $-CH(CH_3)-$ | Cl | 138–141 |
| O | O | H | H | Methyl | H | $-CH_2-$ | Cl | 168–170 |
| S | S | H | H | Methyl | H | $-CH(CH_3)-$ | Cl | |
| O | O | H | H | Methyl | H | $-C(CH_3)_2-CH_2-$ | Cl | 125–127 |
| O | O | H | H | Methyl | H | $-CH(C_2H_5)-$ | Br | 131–133 |
| O | O | H | H | Äthyl | H | $-CH_2-$ | Cl | |
| O | O | H | H | Methyl | H | $-C(CH_3)_2-$ | Br | 91–93 |
| O | O | 4 $CH_3$ | H | Methyl | H | $-CH(CH_3)-$ | Br | 207–210 |
| O | O | H | H | Methyl | H | $-(CH_2)_3-$ | Cl | |
| S | O | H | H | Methyl | H | $-CH(CH_3)-$ | Br | 160–162 |
| O | O | H | H | Methyl | H | $-CH(CH_3)-$ | Br | 142–143 |
| O | S | H | H | Methyl | H | $-CH(CH_3)-$ | Br | |
| O | O | H | H | Phenyl | H | $-CH_2-$ | Cl | 170–173 |
| O | O | H | $CH_3$ | Methyl | H | $-CH(CH_3)-$ | Cl | |
| O | O | H | H | Phenyl | H | $-C(CH_3)_2-CH_2-$ | Cl | 143–145 |
| O | O | H | H | Phenyl | H | $-CH(CH_3)-$ | Cl | 170–172 |
| O | O | H | H | Methyl | $CH_3$ | $-CH(CH_3)-$ | Br | |

## IV. 3-Nitro- und 3-Amino-anilide

### Beispiel E

Zu einer Mischung aus 152 Gew.-Teilen N-Methyl-3-nitranilin, 126 Gew.-Teilen Natriumhydrogencarbonat und 800 Gew.-Teilen Essigester werden bei Raumtemperatur unter gutem Rühren 254 Gew.-Teile α-(2,4-Dichlorphenoxy)propionylchlorid getropft. Man läßt 16 Stunden bei Raumtemperatur nachrühren, filtriert, destilliert das Lösungsmittel am Rotationsverdampfer ab und verrührt mit Petroläther, saugt ab und trocknet.
Fp.: 125–127.
Die Verbindung hat folgende Strukturformel:

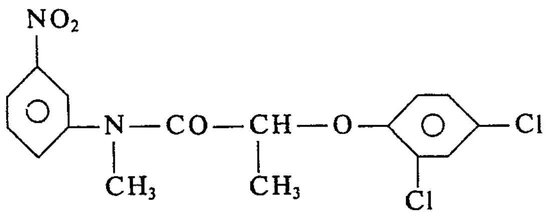

### Beispiel F

62 Gew.-Teile 3-Nitroanilin und 96,5 Gew.-Teile α-(2-Methyl-4-chlorphenoxy)propionsäure werden in 300 Gew.-Teilen Tetrahydrofuran gelöst. Man versetzt bei Raumtemperatur unter Rühren langsam mit 102 Gew.-Teilen Dicyclohexylcarbodiimid in 200 Gew.-Teilen Tetrahydrofuran. Nach 16 Stunden Rühren wird abgesaugt, eingeengt, in Essigester aufgelöst, mit 5%iger Natronlauge, 5%iger Salzsäure und Wasser ausgeschüttelt, getrocknet und eingeengt. Der Rückstand wird aus Methanol umkristallisiert.
Fp.: 124–127°C.
Die Verbindung hat folgende Strukturformel:

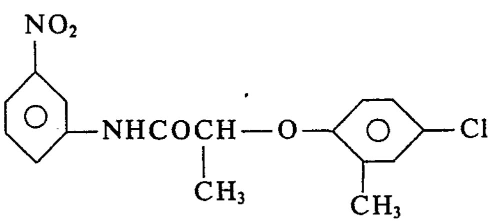

### Beispiel G

Eine Mischung aus 219 Gew.-Teilen α-(2,4-Dichlorphenoxy)propionsäure-m-nitroanilid, 7 Gew.-Teilen 10% Palladium auf Tierkohle und 2000 Gew.-Teilen Tetrahydrofuran werden bei Raumtemperatur drucklos hydriert. Nach der theoretischen Wasserstoffaufnahme wird filtriert, vom Lösungsmittel befreit und mit Petroläther zur Kristallisation gebracht.
Fp.: 125–128°C.
Die Verbindung hat folgende Strukturformel:

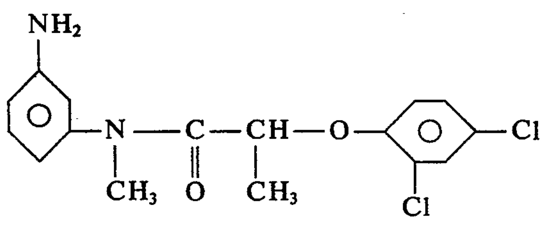

Nach entsprechendem Verfahren können folgende 3-Nitro- und 3-Aminoanilide (G und H) hergestellt werden.

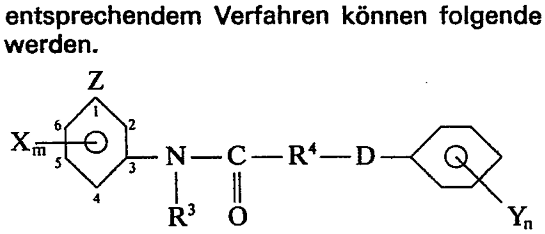

| Z | X | $R^3$ | $R^4$ | D | Y | Fp. °C |
|---|---|---|---|---|---|---|
| $NO_2$ | H | H | $-CH(CH_3)-$ | O | 2,4-$Cl_2$ | 164–166 |
| $NO_2$ | H | H | $-CH_2-$ | O | 2,4-$Cl_2$ | 203–205 |
| $NO_2$ | 4 F | H | $-CH(CH_3)-$ | O | 2 $CH_3$4Cl | |
| $NO_2$ | H | $CH_3$ | $-CH(CH_3)-$ | O | 2,4,5 $Cl_3$ | |
| $NO_2$ | H | H | $-(CH_2)_3-$ | O | 2,4 $Cl_2$ | |
| $NO_2$ | H | H | $-CH(CH_3)-$ | S | H | |
| $NO_2$ | H | H | $-CH(CH_3)-$ | O | 2,4 $(CH_3)_2$ | |
| $NO_2$ | H | H | $-CH(CH_3)-$ | O | 3 Cl | |
| $NO_2$ | 6 $OCH_3$ | H | $-CH(CH_3)-$ | O | 2,4-$Cl_2$ | 185–187 |
| $NH_2$ | H | H | $-CH(CH_3)-$ | O | 2,4 $Cl_2$ | 131–134 |
| $NH_2$ | H | H | $-CH(CH_3)-$ | O | 2 $CH_3$–4 Cl | 82– 84 |
| $NH_2$ | H | H | $-CH_2-$ | O | 2,4 $Cl_2$ | 125–127 |
| $NH_2$ | 4 F | H | $-CH(CH_3)-$ | O | 2 $CH_3$–4 Cl | |
| $NH_2$ | H | $CH_3$ | $-CH(CH_3)-$ | O | 2,4,5 $Cl_3$ | |
| $NH_2$ | H | H | $-(CH_2)_3)-$ | O | 2,4 $Cl_2$ | |
| $NH_2$ | H | H | $-CH(CH_3)-$ | S | H | |
| $NH_2$ | H | H | $-CH(CH_3)-$ | O | 2,4 $(CH_3)$ | |
| $NH_2$ | H | H | $-CH(CH_3)-$ | O | 3 Cl | |

## V. m-Anilidurethane

### Beispiel 1

21,1 Gew.-Teile α-(3-Chlorphenoxy)-propionsäuremethylester und 16,3 Gew.-Teile 3-(O-Methoxy-carbamoxyl)-anilin werden 48 Stunden auf 130°C gehalten. Das Rohprodukt wird über Kieselgel mit einer Mischung aus 95 Teilen Methylenchlorid und 5 Teilen Methanol chromatographiert. Man erhält weiße Kristalle vom Fp. 129–131°C mit folgender Strukturformel:

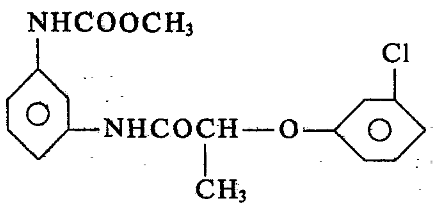

### Beispiel 2

Zu einer Mischung aus 10,5 Gew.-Teilen α-(2-Methyl-4-chlorphenoxy)-propionsäure-(m-aminoanilid), 6 Gew.-Teilen Natriumhydrogencarbonat und 150 Gew.-Teilen Tetrahydrofuran werden bei Raumtemperatur 3,8 Gew.-Teile Chlorameisensäurethiomethylester getropft. Man läßt 10 Stunden rühren, filtriert und engt ein. Das erhaltene Öl wird mit Toluol/Petroläther zur Kristallisation gebracht. Fp.: 148–150°C.

Die Verbindung hat folgende Strukturformel:

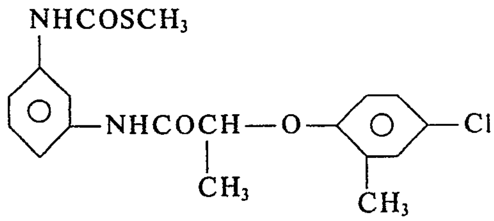

Beispiel 3

Zu einer Mischung aus 11,6 Gew.-Teilen 3-(O-Methylcarbamoxyl)anilin, 10,5 Gew.-Teilen Natriumhydrogencarbonat und 200 Gew.-Teilen Tetrahydrofuran werden bei Raumtemperatur unter gutem Rühren 24,8 Gew.-Teile α-(2,4-Dichlorphenoxy)propionylchlorid getropft. Man läßt 16 Stunden bei Raumtemperatur nachrühren, filtriert, destilliert das Lösungsmittel am Rotationsverdampfer ab und kristallisiert aus Diäthyläther um.
Fp.: 108 – 110° C.
Die Verbindung hat folgende Strukturformel:

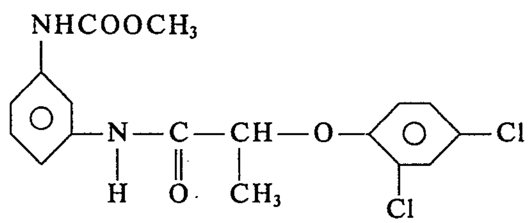

Beispiel 4

157 Gew.-Teile 3-(O-Methylcarbamoyl)-anilin und 200 Gew.-Teile α-(2-Methyl-4-chlorphenoxypropionsäure werden in 600 Gew.-Teilen Tetrahydrofuran gelöst. Man versetzt bei Raumtemperatur unter Rühren langsam mit 191 Gew.-Teilen Dicyclohexylcarbodiimid in 500 Gew.-Teilen Tetrahydrofuran. Nach 3 Stunden wird abgesaugt, eingeengt, in Essigester aufgelöst, mit 5%iger (Gew.-%) Natronlauge, 5%iger Salzsäure und Wasser ausgeschüttelt, getrocknet und eingeengt. Der Rückstand wird aus Methanol umkristallisiert. Fp.: 114 – 115° C.
Die Verbindung hat folgende Strukturformel:

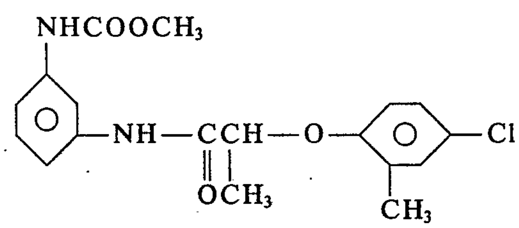

Beispiel 5

25,7 Gew.-Teile α-Chlorpropionsäure-3-(O-methylcaramoyl)-anilid werden mit 22,7 g Natrium-4-chlorphenolat in 200 Gew.-Teilen Acetonitril 14 Stunden zum Sieden erhitzt. Nach dem Filtrieren wird eingeengt, in Methylenchlorid aufgenommen und mit verdünnter Natronlauge ausgeschüttelt. Nach dem Trocknen über Natriumsulfat wird das Lösungsmittel abdestilliert und der Rückstand über Kieselgel mit Methylenchlorid chromatographiert. Man erhält weiße Kristalle vom Fp. 148 bis 151° C mit folgender Strukturformel:

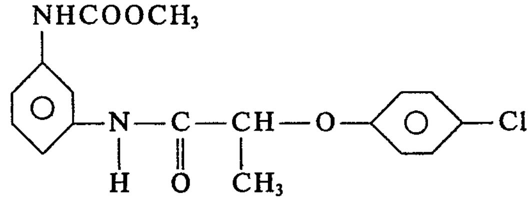

In entsprechender Weise können die folgenden Verbindungen hergestellt werden:

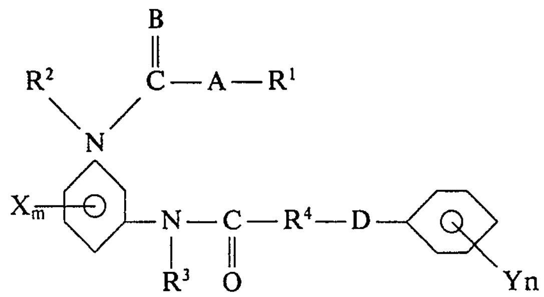

| Nº | A | B | D | $R^1$ | $R^2$ | $R^3$ | $R^4$ | X | Y | Fp. °C |
|---|---|---|---|---|---|---|---|---|---|---|
| 6 | O | O | O | $C_2H_5$ | H | H | $-CH(CH_3)-$ | H | 2,4 $Cl_2$ | 83–85 |
| 7 | O | O | O | $CH_3$ | $CH_3$ | H | $-CH(CH_3)-$ | H | 2,4 $Cl_2$ | 120–122 |
| 8 | O | O | O | $CH_3$ | H | $CH_3$ | $-CH(CH_3)-$ | H | 2,4 $Cl_2$ | 161–163 |
| 9 | S | O | O | t-$C_4H_9$ | H | H | $-CH(CH_3)-$ | H | 2,4 $Cl_2$ | 119–121 |
| 10 | O | S | S | $CH_2CH_2OCH_3$ | $C_2H_5$ | H | $-(CH_2)_2$ | 5-$CH_3$ | 4 $N(CH_3)_2$ | |
| 11 | O | S | O | $C_2H_5$ | H | $CH_2OCH_3$ | $-C(C_2H_5)(CH_2Cl)-CH_2-$ | H | 4-$SCH_3$ | |
| 12 | O | O | O | $CH_2CN$ | H | H | $-CH(CH_3)-$ | H | 2,4 $Cl_2$ | 84–85 |
| 13 | S | O | O | $CH_3$ | i$C_3H_7$ | H | $-CH(CH_3)-$ | H | 3 $SO_2CH_3$ | |
| 14 | O | O | S | $CH_3$ | H | H | $-CH(iC_3H_7)-$ | H | 4 Cl | 142–144 |
| 15 | S | S | O | $CH_3$ | H | H | $-CH(CH_3)-$ | H | 2,4 $Cl_2$ | 137–139 |
| 16 | O | O | O | $CH_3$ | $CH_2OCH_3$ | H | $-CH(CH_3)-$ | H | 4 $OCF_2CHF_2$ | |
| 17 | O | O | O | $CH_3$ | H | H | $-CH_2-$ | H | 2,4,5 $Cl_3$ | 179–181 |
| 18 | O | O | O | $CH_3$ | H | $C_2H_5$ | $-CH(CH_3)-$ | H | 3 $CH_2OCH_3$ | |
| 19 | O | O | O | i-$C_3H_7$ | H | H | $-CH(CH_3)-$ | H | 2,4 $Cl_2$ | 152–154 |
| 20 | S | O | O | $C_2H_5$ | $CH_2CH_2OCH_3$ | H | $-CH(CH_3)-$ | H | 4 Cyclohexyl | |
| 21 | S | S | S | $CH_3$ | H | H | $-CH(CH_3)-$ | H | 3-$NHCOCH_3$ | |
| 22 | O | O | O | $CH_2C\equiv CH$ | H | H | $-CH(CH_3)-$ | H | 2,4 $Cl_2$ | 111–113 |
| 23 | O | O | O | $CH_3$ | H | i-$C_3H_7$ | $-CH_2-$ | H | 2,4 $J_2$ | |
| 24 | O | O | O | $CH_3$ | $CH_2Cl$ | $CH_3$ | $-CH(CH_3)-$ | H | 2,4 $Cl_2$ | |
| 25 | O | O | O | $CH_3$ | H | H | $-CH(C_2H_5)-$ | H | 2,4 $Cl_2$ | 101–103 |
| 26 | O | O | O | $CH_3$ | H | H | $-CH(CH_2OCH_3)-$ | H | 2 Br 4 Cl | 124–126 |
| 27 | O | S | S | $CH_3$ | H | H | $-CH(CH_3)-$ | H | 2,4 $Cl_2$ | |
| 28 | O | O | O | $CH_2CH_2OCH_3$ | H | H | $-CH(CH_3)-$ | H | 2,4 $Cl_2$ | zähes Öl |
| 29 | O | O | O | $CH_3$ | H | H | $-C(CH_3)_2-$ | H | 2,4 $Cl_2$ | 147–148 |

(Fortsetzung)

| Nº | A | B | D | $R^1$ | $R^2$ | $R^3$ | $R^4$ | X | Y | Fp. °C |
|---|---|---|---|---|---|---|---|---|---|---|
| 30 | O | O | O | $CH_3$ | H | H | $—CH(CH_2Cl)—$ | H | 2 $CH_3$ 4 Cl | |
| 31 | S | O | S | $CH_3$ | H | H | $—CH(CH_3)—$ | H | 2,4 $Cl_2$ | |
| 32 | O | O | O | $CH_2CH_2Cl$ | H | H | $—CH(CH_3)—$ | H | 2,4 $Cl_2$ | 59–61 |
| 33 | S | S | S | $C_2H_5$ | $CH_3$ | H | $-CH(CH_2CH_2OCH_3)-CH_2-$ | 4 $CH_3$ | 3 SCN | |
| 34 | O | O | O | $CH_3$ | H | H | $—C(CH_3)(C_2H_5)—$ | H | 2 $CH_3$ 4 Cl | |
| 35 | O | O | O | $CH_2COOCH_3$ | H | H | $—CH(CH_3)—$ | H | 2,4 $Cl_2$ | 146–148 |
| 36 | O | O | O | $CH_3$ | H | H | $—(CH_2)_3—$ | H | 2,4 $Cl_2$ | 110–112 |
| 37 | O | S | O | $CH_2C{\equiv}CH$ | H | $CH_3$ | $—CH(CH_2CH_2Cl)—$ | 6 Cl | 3-$COOCH_3$ | |
| 38 | O | O | O | $CH_2CH{=}CH_2$ | H | H | $—CH(CH_3)—$ | H | 2,4 $Cl_2$ | 76–78 |
| 39 | O | O | O | $CH_3$ | H | H | $—C(C_2H_5)_2—$ | H | 2 Br 4 Cl | |
| 40 | O | O | O | $CH_3$ | H | H | $—CH_2—$ | H | 2,4 $Cl_2$ | 189–190 |
| 41 | O | O | O | t-$C_4H_9$ | H | H | $—CH(CH_3)—$ | H | 2,4 $Cl_2$ | 88–89 |
| 42 | O | O | O | $CH_3$ | H | H | $—C(CH_3)(CH_2Cl)—$ | H | 2 $CH_3$ 4 Cl | |
| 43 | S | O | O | $CH_3$ | H | H | $—(CH_2)_2—$ | H | 2,4,5 $Cl_3$ | |
| 44 | S | O | O | $CH_2CH_2CN$ | H | H | $—CH(CH_3)—$ | H | 2 F 4 Br | |
| 45 | O | O | O | cycl. $C_7H_{13}$ | H | H | $—CH(CH_3)—$ | H | 2,4 $Cl_2$ | 82–84 |
| 46 | O | O | O | $CH_3$ | H | H | $—CH(CH_3)—$ | 6-Cl | 2,4 $Cl_2$ | |
| 47 | S | O | O | $CH_3$ | H | $CH_3$ | $—CH(CH_3)—$ | H | 2,4 $Cl_2$ | 188–190 |
| 48 | O | O | O | 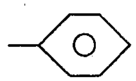 | $C_2H_5$ | H | $—CH(CH_3)—$ | H | 2,4 $Cl_2$ | 97–98 |
| 49 | O | O | O | $CH(CH_3)CH_2CN$ | H | H | $—CH(CH_3)—$ | H | 3-$NHCON(CH_3)_2$ | |
| 50 | O | O | O | $CH_3$ | H | H | $—CH(CH_3)—$ | H | 2 Cl 4 Br | 122–124 |
| 51 | O | O | O | $CH_3$ | H | H | $—CH_2—$ | H | H | 155–156 |
| 52 | O | O | O | $CH_3$ | H | H | $—CH(CH_3)—$ | H | 2 Br 4 Cl | 145–147 |

(Fortsetzung)

| N° | A | B | D | $R^1$ | $R^2$ | $R^3$ | $R^4$ | X | Y | Fp. °C |
|---|---|---|---|---|---|---|---|---|---|---|
| 53 | O | O | O | $CH_3$ | H | H | $-CH(CH_3)-$ | H | 4 F | 110–111 |
| 54 | O | O | O | $CH(CH_3)CN$ | H | H | $-CH(nC_3H_7)-$ | H | 3 $CONHCH_3$ | |
| 55 | O | O | O | $C_2H_5$ | H | $CH_3$ | $-CH(CH_3)-$ | H | 2,4 $Cl_2$ | 150–153 |
| 56 | O | O | O | i-$C_4H_9$ | H | H | $-CH(CH_3)-$ | H | 2 Br 4 Cl | |
| 57 | O | O | O | $CH_3$ | H | H | $-CH(CH_3)-$ | H | 2 Cl | 138–140 |
| 58 | O | O | O | $CH_3$ | H | H | $-CH(CH_3)-$ | H | 4 Br | 153–155 |
| 59 | O | O | O | $CH_2-CCl=CH_2$ | H | H | $-CH(CH_3)-(CH_2)_3-$ | 2 $CH_3$ | 4 $NHCONHCH_3$ | |
| 60 | O | O | O | $CH_3$ | H | H | $-CH_2-$ | H | 3,4 $Cl_2$ | 185–187 |
| 61 | O | O | O | $CH_3$ | H | H | $-CH(CH_3)-$ | H | 3 $CF_3$ | 97–99 |
| 62 | O | O | O | $CH(CH_3)CH=CH_2$ | H | H | $-CH(CH_3)-$ | H | 2,4 $Cl_2$ | |
| 63 | O | O | S | $CH_2C\equiv CCH_2Cl$ | H | H | $-CH(CH_3)-$ | H | 4 $OSO_2CH_3$ | |
| 64 | O | O | O | $CH_3$ | H | H | $-(CH_2)_4-$ | H | 2,4,5 $Cl_3$ | |
| 65 | O | O | O | $CH_3$ | H | H | $-CH(CH_3)-$ | H | 2 Cl 4 F | 120–122 |
| 66 | O | O | O | $CH_3$ | H | H | $-CH(CH_3)-$ | 6-$OCH_3$ | 2,4 $Cl_2$ | 141–143 |
| 67 | O | O | O | $CH_3$ | H | H | $-CH(CH_3)-$ | H | 2 Cl 4– 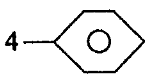 | zähes Öl |
| 68 | O | O | O | $CH_2C\equiv CCH_2OCH_3$ | H | H | $-CH(nC_4H_9)-$ | H | 2-$COCH_3$ | |
| 69 | S | O | O | $nC_3H_7$ | H | H | $-(CH_2)_5-$ | H | 4 $SO_2NHCH_3$ | |
| 70 | O | O | O | $CH_3$ | H | H | $-CH(CH_3)-$ | H | 3 $CH_3$ 4 Cl | 136–137 |
| 71 | O | O | O | $CH_3$ | H | H | $-CH(CH_3)-$ | H | 2,4 $(CH_3)_2$ | 110–112 |
| 72 | O | O | O | $CH(CH_3)C\equiv CH$ | H | H | $-CH(CH_3)-$ | H | 2 Br 4 Cl | |
| 73 | O | O | O | $CH_3$ | H | H | $-CH(CH_3)-CH_2-$ | H | 2,4 Cl | |
| 74 | S | O | O | tert. $C_4H_9$ | H | $CH_3$ | $-CH(CH_3)-$ | H | 2,4 Cl | 149–151 |
| 75 | O | O | O | cycl. $C_5H_9$ | H | H | $-CH(CH_3)-$ | H | 2,4 $Cl_2$ | |

(Fortsetzung)

| N° | A | B | D | $R^1$ | $R^2$ | $R^3$ | $R^4$ | X | Y | Fp. °C |
|---|---|---|---|---|---|---|---|---|---|---|
| 76 | O | O | O | $CH_3$ | H | H | $-C(CH_3)_2-CH_2$ | H | 2,4 $Cl_2$ | |
| 77 | O | O | O | $CH_3$ | H | H | $-CH(CH_3)-$ | 4 $CH_3$ | 2,4 $Cl_2$ | 164 – 166 |
| 78 | O | O | O | cycl. $C_6H_{11}$ | H | H | $-CH(CH_3)-$ | H | 2,4,5 $Cl_3$ | |
| 79 | O | O | O | $CH_3$ | H | H | $-CH(CH_3)-(CH_2)_2-$ | H | 2,4 $Cl_2$ | |
| 80 | O | O | O | $CH_3$ | H | H | $-CH(CH_3)-$ | H | 2,3 $Cl_2$ | 131 – 134 |
| 81 | O | O | O | $CH_3$ | H | H | $-CH(CH_3)-$ | 2-$CH_3$ | 2,4 $Cl_2$ | |
| 82 | O | O | O | $CH_3$ | H | H | $-CH(CH_3)-$ | H | 2-$CH_2$- 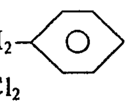 4 Cl | 113 – 115 |
| 83 | O | O | O | sec. $C_4H_9$ | H | H | $-C(CH_3)_2-$ | H | 2,4 $Cl_2$ | |
| 84 | O | O | O | tert. $C_5H_{11}$ | H | H | $-CH(CH_3)-$ | H | 2 $CH_3$ 4 Cl | |
| 85 | O | O | O | $CH_3$ | H | H | $-CH(CH_3)-$ | H | 2,4,6 $Cl_3$ | 146 – 148 |
| 86 | O | O | O | 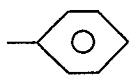 | H | H | $-CH(CH_3)-$ | H | 2,4 $Cl_2$ | 138 – 140 |
| 87 | S | O | O | $CH_3$ | H | H | $-CH(CH_3)-(CH_2)_4-$ | H | 2,4,5 $Cl_3$ | |
| 88 | O | O | S | $CH_2CH_2F$ | H | H | $-CH_2-$ | H | 4-Cl | |
| 89 | O | O | O | $CH_3$ | H | H | $-CH(CH_3)-$ | H | 2,4,5 $Cl_3$ | 162 – 164 |
| 90 | O | O | O | $CH_3$ | H | H | $-CH(CH_3)-$ | H | 3,5 $Cl_2$ | 63 – 64 |
| 91 | O | O | O | $CH_2CF_3$ | H | H | $-CH(CH_3)-$ | H | 2-$SO_2N(CH_3)_2$ | |
| 92 | O | O | O | $CH_3$ | H | H | $-C(CH_3)_2-(CH_2)_4-$ | H | 2,4 $Br_2$ | |
| 93 | O | O | O | $CH_2CH_2OCH_3$ | H | H | $-CH(CH_3)-$ | H | 2 Br 4 Cl | |
| 94 | O | O | O | $CH_3$ | H | H | $-CH(CH_3)-$ | H | 2,5 $Cl_2$ | 65 – 68 |
| 95 | O | O | S | $CH(CH_3)CH_2OCH_3$ | $CH_3$ | $CH_3$ | $-C(CH_3)(C_2H_5)(CH_2)_2-$ | H | 4 F | |
| 96 | O | O | S | $CH_3$ | H | H | $-CH(iC_3H_7)-$ | H | 4 $OCH_3$ | 110 – 113 |
| 97 | O | O | O | $CH(CH_3)COOC_2H_5$ | H | H | $-CH(CH_3)-$ | H | 2,4 $Cl_2$ | zähes Öl |
| 98 | O | O | O | $CH_3$ | H | H | $-CH(CH_3)-$ | H | 4 $NO_2$ | 150 – 152 |

(Fortsetzung)

| N° | A | B | D | R¹ | R² | R³ | R⁴ | X | Y | Fp. °C |
|---|---|---|---|---|---|---|---|---|---|---|
| 99 | O | O | O | $CH_3$ | H | H | $—CH(CH_3)—$ | H | 3 $OCH_3$ | 105–107 |
| 100 | O | O | O | $CH_2CH_2COOCH_3$ | H | $CH_3$ | $—CH(CH_3)—(CH_2)_5—$ | 5-$CH_3$ | H | |
| 101 | O | O | O | $CH_3$ | H | H | $—CH(CH_3)—$ | H | 4 $OCH_3$ | 102–114 |
| 102 | O | O | O | $CH_3$ | H | H | $—CH(CH_3)—$ | H | 3 $NO_2$ | 60–62 |
| 103 | O | O | O | cycl. $C_7H_{13}$ | H | H | $—CH(CH_3)—$ | H | 3 $NHCOOCH_3$ | |
| 104 | S | O | O | $CH_3$ | H | H | $—CH(CH_3)—(CH_2)_5—$ | H | 2 $CH_3$ 4 Cl | |
| 105 | O | O | O | $CH_3$ | H | H | $—CH(CH_3)—$ | H | 2 Br 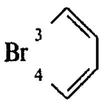 | 122–124 |
| 106 | O | O | O | $CH_3$ | H | H | $—CH(CH_3)—$ | H | 2,4 $Br_2$ | 141–143 |
| 107 | O | O | O | $CH_3$ | H | H | $—CH(CH_3)—$ | H | 4-CN | 134–136 |
| 108 | O | O | O | $—CH_2—$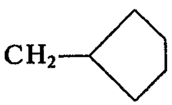 | H | H | $—CH(CH_3)—$ | H | 2,4 $Cl_2$ | |
| 109 | O | O | O | $CH_3$ | H | H | $—(CH_2)_6—$ | H | 2,4,5 $Cl_3$ | |
| 110 | O | O | O | $CH_3$ | H | H | $—CH(CH_3)—$ | H | 2 $CH_3$ 4 Cl 5-iso$C_3H_7$ | 108–110 |
| 111 | O | O | S | 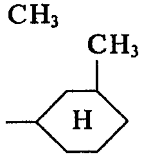 | H | H | $—(CH_2)_3—$ | 6 $CH_3$ | H | |
| 112 | S | O | O | $CH_3$ | H | H | $—CH(CH_3)—$ | H | 2 Br 4 Cl | 94–96 |
| 113 | O | O | O | $C_2H_5$ | H | H | $—CH(CH_3)—$ | H | 2 Br 4 Cl | 84–86 |
| 114 | O | O | O | $CH_3$ | H | H | $—CH(iC_3H_7)—$ | H | 2,4 $Cl_2$ | |
| 115 | O | O | O | 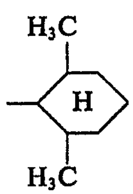 | H | H | $—CH_2—$ | 4 $OCH_3$ | 3-Cl | |

(Fortsetzung)

| N° | A | B | D | $R^1$ | $R^2$ | $R^3$ | $R^4$ | X | Y | Fp. °C |
|---|---|---|---|---|---|---|---|---|---|---|
| 116 | O | O | O | $CH_3$ | H | H | $-C(CH_3)_2-(CH_2)_5-$ | H | 2,4 $Cl_2$ | |
| 117 | O | O | O | $CH_3$ | H | H | $-CH(CH_3)-$ | H | 2,4 $Cl_2$ 6 $CH_3$ | 140–142 |
| 118 | O | O | O | $CH_3$ | H | H | $-CH(nC_3H_7)-$ | H | 2,4 $Cl_2$ | |
| 119 | O | O | O | 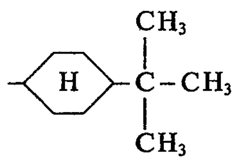 | H | H | $-CH_2-$ | 6 $OCH_3$ | H | |
| 120 | O | O | O | $CH_3$ | H | H | $-CH(CH_3)-$ | H | 2 Br 4 F | 130–132 |
| 121 | O | O | O | 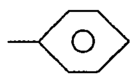 | $CH_2CH_2Cl$ | H | $-(CH_2)_3-$ | 4 Cl | H | |
| 122 | O | O | O | $C_2H_5$ | H | H | $-C(CH_3)(CH_2CH_2Cl)-(CH_2)_2-$ | H | 4 Br | |
| 123 | S | O | O | $CH_3$ | H | $CH_2CH_2OCH_3$ | $-CH_2-$ | 5 $CF_3$ | 3 $CF_3$ | |
| 124 | O | O | O | $CH_3$ | H | H | $-C(CH_3)_2-(CH_2)_2-$ | H | 2,4 $Cl_2$ | |
| 125 | O | O | O | 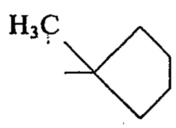 | H | H | $-CH(CH_3)-$ | H | 2,4 $Cl_2$ | 96–98 |
| 126 | O | O | O | $CH_3$ | H | H | $-CH(CH_3)-$ | H | 2 $COOCH_3$ 4 Cl | 153–155 |
| 127 | S | S | O | $CH_3$ | H | H | $-CH(CH_3)-(CH_2)_3-$ | H | 4 F | |
| 128 | O | O | O | i-$C_3H_7$ | H | H | $-CH(CH_3)-$ | H | 2 $CH_3$ 4 Cl | 145–148 |
| 129 | O | O | O | $CH_3$ | H | H | $-(CH_2)_4-$ | H | 2,4 $Cl_2$ | |
| 130 | O | O | O | $CH_3$ | H | H | $-C(CH_2Cl)_2-CH_2-$ | H | 2 $CH_3$ 4 Cl | |
| 131 | O | O | O | $CH_3$ | H | H | $-CH(CH_3)-$ | H | 2 F | 103–105 |
| 132 | O | O | O | $CH_3$ | H | $CH_2Cl$ | $-CH(CH_3)-$ | H | 2 Br 4 Cl | |
| 133 | O | O | O | $CH_3$ | H | H | $-CH_2-$ | H | 2 $CH_3$ 4 Cl | 173–175 |
| 134 | O | O | O | $CH_3$ | H | H | $-C(CH_3)(CH_2OCH_3)-$ | H | 2,4 $Cl_2$ | |

(Fortsetzung)

| N° | A | B | D | $R^1$ | $R^2$ | $R^3$ | $R^4$ | X | Y | Fp. °C |
|---|---|---|---|---|---|---|---|---|---|---|
| 135 | O | O | O | $CH_3$ | H | H | $-CH(CH_3)-$ | H | 2 Cl 4 $NO_2$ | |
| 136 | O | O | O | $CH_3$ | H | H | $-CH(CH_3)-$ | H | 3 F | 98–100 |
| 137 | O | O | O | $CH_3$ | H | H | $-CH(CH_3)-$ | H | 2 Br 4 $NO_2$ | |
| 138 | O | S | O | $CH_3$ | H | H | $-C(CH_3)_2-(CH_2)_3-$ | H | 2,4,5-$Cl_3$ | |
| 139 | O | O | O | $CH_3$ | H | H | $-(CH_2)_6-$ | H | 2,4 $Cl_2$ | |
| 140 | O | O | O | $CH_3$ | H | H | $-CH(CH_3)-$ | H | 2 $NO_2$ 4 Cl | 199–202 |
| 141 | O | O | O | $CH_3$ | H | H | $-CH(CH_3)-$ | H | 2 Br 4 $SCH_3$ | |
| 142 | S | O | O | $CH_3$ | H | H | $-CH(CH_3)-$ | H | 2,4 $Cl_2$ | 112–114 |
| 143 | O | O | O | $CH_3$ | H | H | $-CH(CH_3)-$ | H | 2 CHO 4 Cl | 170–172 |
| 144 | O | O | O | $CH_3$ | H | H | $-CH(CH_3)-$ | H | 2 Br 4 $OCH_3$ | |
| 145 | O | O | O | $CH_3$ | H | H | $-CH(CH_3)-$ | 4 Cl | 2,4 $Cl_2$ | |
| 146 | O | O | O | $CH_3$ | H | H | $-CH(CH_3)-$ | H | 2 Cl-5 $OCH_3$ | 133–135 |
| 147 | O | O | O | $CH_3$ | H | H | $-CH(CH_3)-$ | H | 2 Cl-4 $SCH_3$ | |
| 148 | O | O | S | $CH_3$ | H | H | $-CH(CH_3)-$ | H | 2,4 $Cl_2$ | 66–69 |
| 149 | O | O | O | $CH_3$ | H | H | $-CH_2-$ | H | 4 Cl | 143–144 |
| 150 | O | O | O | $C_2H_5$ | H | H | $-CH(CH_3)-$ | H | 2 $CH_3$ 4 Cl | 112–114 |
| 151 | O | O | O | $CH_3$ | H | H | $-CH(CH_3)-$ | H | 2 Cl 4 $SO_2CH_3$ | |
| 152 | O | O | O | $CH_3$ | H | H | $-CH(CH_3)-$ | H | 3,4 $Cl_2$ | 106–108 |
| 153 | O | O | O | $CH_3$ | H | H | $-CH(CH_3)-$ | 4 $OCH_3$ | 2,4 $Cl_2$ | |
| 154 | O | O | O | $CH_3$ | H | H | $-CH(CH_3)-$ | H | 2 F 5 $C(CH_3)_3$ | |
| 155 | O | O | O | $CH_3$ | H | H | $-CH(CH_3)-$ | H | 2,6 $Cl_2$ | |
| 156 | O | O | O | $CH_3$ | H | H | $-CH(CH_3)-$ | H | 2,4 $Cl_2$ 6 F | |
| 157 | O | O | O | $CH_3$ | H | H | $-CH(CH_3)-$ | H | H | 115–117 |
| 158 | O | O | O | $CH_3$ | H | H | $-CH(CH_3)-$ | H | 2 $CH_3$ | 113–116 |

(Fortsetzung)

| N° | A | B | D | $R^1$ | $R^2$ | $R^3$ | $R^4$ | X | Y | Fp. °C |
|---|---|---|---|---|---|---|---|---|---|---|
| 159 | O | O | O | $CH_3$ | H | H | $-CH(CH_3)-$ | H | 3 CN | 114–115 |
| 160 | O | O | O | $CH_3$ | H | H | $-CH(CH_3)-$ | H | 3 $CH_3$ | 116–118 |
| 161 | O | O | O | $CH_3$ | H | H | $-CH(CH_3)-$ | 6 $CH_3$ | 2,4 $Cl_2$ | 167–169 |
| 162 | O | O | O | $CH_3$ | H | H | $-CH(CH_3)-$ | H | 3 $C(CH_3)_3$ | 106–108 |
| 163 | O | O | O | $CH_3$ | H | H | $-(CH_2)_2-$ | H | 2,4 $Cl_2$ | 162–164 |
| 164 | O | O | O | $CH_3$ | H | H | $-CH(CH_3)-$ | H | 2 $CH_2OCH_3$ 4 Cl | |
| 165 | O | O | O | $CH_3$ | H | H | $-CH(CH_3)-$ | H | 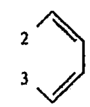 | 155–157 |
| 166 | O | O | O | $CH_3$ | H | H | $-CH(CH_3)-$ | 4 $CH_3$ | 2 Br 4 Cl | 123–125 |
| 167 | O | S | O | $CH_3$ | H | H | $-CH(CH_3)-$ | H | 2,4 $Cl_2$ | 168–169 |
| 168 | O | O | O | $CH_3$ | H | H | $-CH_2-$ | H | 2 Br 4 Cl | 190–192 |
| 169 | O | O | O | $CH_3$ | H | H | $-CH(CH_3)-$ | H | 3 Cl 4 F | |
| 170 | O | O | O | $CH_3$ | H | H | $-(CH_2)_2CH(CH_3)-$ | H | 2,4 $Cl_2$ | |
| 171 | O | O | O | $CH_3$ | H | H | $-C(CH_3)(CH_2)_2-$ | H | 2,4 $Cl_2$ | |
| 172 | O | O | O | $CH_3$ | H | H | $-CH(CH_3)-$ | H | 2 Cl 5 $CH_3$ | 104–106 |
| 173 | O | O | O | $CH_3$ | H | H | $-CH(CH_3)-$ | 5-$CF_3$ | 2,4 $Cl_2$ | 114–116 |
| 174 | O | O | S | $CH_3$ | H | H | $-CH_2-$ | H | H | 105–106 |
| 175 | O | O | O | $CH_3$ | H | H | $-CH(CH_3)-$ | H | 2 Br 5 $C(CH_3)_3$ | |
| 176 | O | O | O | $CH_3$ | H | H | $-CH(CH_3)-$ | H | 2 $CH_3$ 4,5 $Cl_2$ | |
| 177 | O | O | O | $CH_3$ | H | H | $-CH(CH_3)-$ | H | 2,4 $Cl_2$ 5 $CH_3$ | |
| 178 | O | O | O | $CH_3$ | H | H | $-CH(CH_3)-$ | H | 2 Br | 89–91 |
| 179 | O | O | O | $CH_3$ | H | H | $-CH(CH_3)-$ | H | 3 Br | 127–128 |
| 180 | O | O | O | $CH_3$ | H | H | $-CH(CH_3)-$ | H | 2 J | |

(Fortsetzung)

| N° | A | B | D | $R^1$ | $R^2$ | $R^3$ | $R^4$ | X | Y | Fp. °C |
|---|---|---|---|---|---|---|---|---|---|---|
| 181 | O | O | O | $CH_3$ | H | H | $-CH(CH_3)-$ | H | 3 J | |
| 182 | O | O | O | $CH_3$ | H | H | $-CH(CH_3)-$ | H | 4 J | |
| 183 | O | O | O | $CH_3$ | H | H | $-CH(CH_3)-$ | H | 2 SCN | |
| 184 | O | O | O | $CH_3$ | H | H | $-CH(CH_3)-$ | H | 3 SCN | |
| 185 | O | O | O | $CH_3$ | H | H | $-CH(CH_3)-$ | H | 4 SCN | |
| 186 | O | O | O | $CH_3$ | H | H | $-CH(CH_3)-$ | H | 2,4 $F_2$ | |
| 187 | O | O | O | $CH_3$ | H | H | $-CH(CH_3)-$ | H | 2 F 4 Cl | 119–122 |
| 188 | O | O | O | $CH_3$ | H | H | $-CH(CH_3)-$ | H | 2 F 4 Br | |
| 189 | O | O | O | $CH_3$ | H | H | $-CH(CH_3)-$ | H | 2 J 4 Cl | |
| 190 | O | O | O | $CH_3$ | H | H | $-CH(CH_3)-$ | H | 2 Cl 4 $CH_3$ | |
| 191 | O | O | O | $CH_3$ | H | H | $-CH(CH_3)-$ | H | 2 Br 4 $CH_3$ | 120–122 |
| 192 | O | O | O | $CH_3$ | H | H | $-CH(CH_3)-$ | H | 2 Cl 4 $CF_3$ | |
| 193 | O | O | O | $CH_3$ | H | H | $-CH(CH_3)-$ | H | 4 $CF_3$ | 103–105 |
| 194 | O | O | O | $CH_3$ | H | H | $-CH(CH_3)-$ | H | 3 $OCHF_2$ | |
| 195 | O | O | O | $CH_3$ | H | H | $-CH(CH_3)-$ | H | 3 $OCF_2CHF_2$ | |
| 196 | O | O | O | $CH_3$ | H | H | $-CH(CH_3)-$ | H | 3 $C_2H_5$ | |
| 197 | O | O | O | $CH_3$ | H | H | $-CH(CH_3)-$ | H | 2,5 $(CH_3)_2$ 4 Cl | |
| 198 | O | O | O | $CH_3$ | H | H | $-CH(CH_3)-$ | H | 2,6 $Cl_2$ 4 $CF_3$ | |
| 199 | O | O | O | $CH_3$ | H | H | $-CH(CH_3)-$ | H | 2,3,4,5,6 $Cl_5$ | |
| 200 | O | O | O | $CH_3$ | H | H | $-CH(CH_3)-$ | H | 2,4 $Cl_2$ 3 $CH_3$ | |
| 201 | O | O | O | $CH_3$ | H | H | $-CH(CH_3)-$ | 4 F | 2,4 $Cl_2$ | |
| 202 | O | O | O | $CH(CH_2F)_2$ | H | H | $-CH(CH_3)-$ | H | 2,4 $Cl_2$ | 144–146 |
| 203 | O | O | O | $CH_3$ | H | H | $-CH(CH_3)-$ | H | 2 $CF_3$ | 98–99 |
| 204 | S | O | O | $C_2H_5$ | H | H | $-CH(CH_3)-$ | H | 2,4 $Cl_2$ | 106–109 |

(Fortsetzung)

| N° | A | B | D | $R^1$ | $R^2$ | $R^3$ | $R^4$ | X | Y | Fp. °C |
|---|---|---|---|---|---|---|---|---|---|---|
| 205 | O | O | O | $CH_3$ | H | H | $-CH(CH_3)-$ | H | 4 $CH_3$ | 118–121 |
| 206 | O | O | O | $CH_3$ | H | H | $-(CH_2)_2-$ | H | 4 Cl | 160–162 |
| 207 | S | O | O | $CH_3$ | H | H | $-CH(CH_3)-$ | H | 2 Cl | 110–112 |
| 208 | S | O | O | $CH_3$ | H | H | $-CH(CH_3)-$ | H | 3 Br | 112–114 |
| 209 | S | O | O | $CH_3$ | H | H | $-CH(CH_3)-$ | H | 2 Br | |
| 210 | O | O | O | $CH_3$ | H | H | $-(CH_2)_2-$ | H | 3 $NO_2$ | 140–142 |
| 211 | O | O | O | $CH_3$ | H | H | $-CH(CH_3)-$ | H | 2 $NO_2$ | 152–154 |
| 212 | O | O | O | i-$C_3H_7$ | H | H | $-CH(CH_3)-$ | H | 2,5 $Cl_2$ | 144–146 |
| 213 | O | O | O | i-$C_3H_7$ | H | H | $-CH(CH_3)-$ | H | 2 Br | |
| 214 | O | O | O | $C_2H_5$ | H | H | $-CH(CH_3)-$ | H | 2 Br | |
| 215 | S | O | O | $CH_3$ | H | H | $-CH(CH_3)-$ | H | 2,5 $Cl_2$ | 121–123 |
| 216 | O | O | O | $CH_3$ | H | H | $-CH(CH_3)-$ | H | 2 Br 4 $CF_3$ | 144–146 |
| 217 | O | O | O | $CH_3$ | H | H | $-CH(CH_3)-$ | H | 2 Cl 4 $C(CH_3)_3$ | zähes Öl |
| 218 | O | O | O | $CH_3$ | H | H | $-CH(CH_3)-$ | H | 3 $NO_2$ 4 $CF_3$ | 144–146 |
| 219 | O | O | O | $CH_3$ | H | H | $-CH(CH_3)-$ | H | 2 Cl 4,5 $(CH_3)_2$ | 128–130 |
| 220 | O | O | O | i-$C_3H_7$ | H | H | $-CH(CH_3)-$ | H | 2,4,5 $Cl_3$ | 126–127 |
| 221 | O | O | O | $C_2H_5$ | H | H | $-CH(CH_3)-$ | H | 2,5 $Cl_2$ | 120–122 |
| 222 | O | O | O | $C_2H_5$ | H | H | $-CH(CH_3)-$ | H | 2 Cl | |
| 223 | O | O | O | $C_2H_5$ | H | H | $-CH(CH_3)-$ | H | 3 Br | |
| 224 | O | O | O | $C_2H_5$ | H | H | $-CH(CH_3)-$ | H | 2,4,5 $Cl_3$ | 129–131 |
| 225 | O | O | O | $C_2H_5$ | H | H | $-CH(CH_3)-$ | H | 2 Cl 4 Br | |
| 226 | S | O | O | $CH_3$ | H | H | $-CH(CH_3)-$ | H | 2,4,5 $Cl_3$ | 177–179 |
| 227 | O | O | O | i-$C_3H_7$ | H | H | $-CH(CH_3)-$ | H | 2 Cl 4 Br | |
| 228 | O | O | O | $C_2H_5$ | H | H | $-CH(CH_3)-$ | H | 2 Cl 4 F | |
| 229 | O | O | O | i-$C_3H_7$ | H | H | $-CH(CH_3)-$ | H | 2 Cl 4 F | |

Die erfindungsgemäßen Substanzen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken, sie sollen in jedem Fall eine feine und gleichmäßige Verteilung der wirksamen Substanzen gewährleisten. Die Formulierungen werden in bekannter Weise hergestellt, z. B. durch Verstrecken des Wirkstoffs mit Lösungsmitteln und/oder Trägerstoffen, gegebenenfalls unter Verwendung von Emulgiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage: Lösungsmittel wie Aromaten (z. B. Xylol, Benzol), chlorierte Aromaten (z. B. Chlorbenzole), Paraffine (z. B. Erdölfraktionen), Alkohole (z. B. Methanol, Butanol), Amine (z. B. Äthanolamin, Dimethylformamid) und Wasser; Trägerstoffe wie natürliche Gesteinsmehle (z. B. Kaoline, Tonerden, Talkum, Kreide) und synthetische Gesteinsmehle (z. B. hochdisperse Kieselsäure, Silikate); Emulgiermittel wie nichtionogene und anionische Emulgatoren (z. B. Polyoxyäthylen-Fettalkohol-Äther, Alkylsulfonate und Arylsulfonate) und Dispergiermittel, wie Lignin-, Sulfitablaugen und Methylcellulose.

Die herbiziden Mittel enthalten im allgemeinen zwischen 0,1 und 95 Gew.-% Wirkstoff, vorzugsweise zwischen 0,5 und 90.

Die Mittel bzw. die daraus hergestellten gebrauchsfertigen Zubereitungen wie lösungen, Emulsionen, Suspensionen, Pulver, Stäube, Pasten oder Granulate werden in bekannter Weise angewendet, beispielsweise durch Versprühen, Vernebeln, Verstäuben, Verstreuen oder Gießen.

## Beispiele zur herbiziden Wirkung

Der Einfluß verschiedener Vertreter der erfindungsgemäßen Verbindungen auf das Wachstum von unerwünschten Pflanzen im Vergleich zu bekannten Wirkstoffen wird in nachfolgenden Gewächshausversuchen demonstriert.

Als Kulturgefäße dienten Plastikblumentöpfe mit 300 $cm^3$ Inhalt und lehmiger Sand mit etwa 1,5% Humus als Substrat. Die Samen der Testpflanzen entsprechend Tabelle 1 wurden nach Arten getrennt flach eingesät. Unmittelbar danach erfolgte bei Vorlaufanwendung das Aufbringen der Wirkstoffe auf die Erdoberfläche. Sie wurden hierbei in Wasser als Verteilungsmittel suspendiert oder emulgiert und mittels fein verteilender Düsen gespritzt. Nach dem Aufbringen der Mittel wurden die Gefäße leicht beregnet, um Keimung und Wachstum in Gang zu bringen und auch gleichzeitig die chemischen Mittel zu aktivieren. Danach deckte man die Gefäße mit durchsichtigen Plastikhauben ab, bis die Pflanzen angewachsen waren. Diese Abdeckung bewirkte ein gleichmäßiges Keimen der Testpflanzen, sofern dies nicht durch die Chemikalien beeinträchtigt wurde.

Zum Zwecke der Nachauflaufbehandlung zog man die Pflanzen je nach Wuchsform in den Versuchsgefäßen erst bis zu einer Höhe von 3 bis 10 cm an und behandelte sie dann. Eine Abdeckung unterblieb. Die Aufstellung der Versuche erfolgte im Gewächshaus, wobei für wärmeliebende Arten heißere Bereiche (25 bis 40° C) und für solche gemäßigter Klimate 15 bis 30° C bevorzugt wurden. Die Versuchsperiode erstreckte sich über 3 bis 6 Wochen. Während dieser Zeit wurden die Pflanzen gepflegt und ihre Reaktion auf die einzelnen Behandlungen wurde ausgewertet. Die folgenden Tabellen enthalten die Prüfsubstanzen, die jeweiligen Dosierungen in kg/ha Aktivsubstanz und die Testpflanzenarten. Bewertet wird nach einer Skala von 0 bis 100.

Dabei bedeutet 0 keine Schädigung oder normalen Ablauf und 100 kein Aufgang der Pflanzen bzw. völlige Zerstörung zumindest der oberirdischen Sproßteile.

Die beigefügten Tabellen präsentieren die selektive herbizide Wirkung der erfindungsgemäßen Verbindungen. Die Applikation kann im Vorauflaufverfahren oder bei Nachauflaufanwendungen erfolgen. Dabei können die Mittel auf den Standort aufgebracht werden bevor die unerwünschten Pflanzen aus den Samen gekeimt oder aus vegetativen Pflanzenteilen ausgetrieben haben oder sie werden auf die Blätter der unerwünschten Pflanzen und der Kulturpflanzen appliziert. Eine weitere Ausbringungstechnik besteht darin, daß die Wirkstoffe mit Hilfe der Spritzgeräte so gespritzt werden, daß die Blätter empfindlicher Kulturpflanzen nach Möglichkeit nicht getroffen werden, während die Wirkstoffe auf die darunterliegende Bodenfläche oder dort wachsende unerwünschte Pflanzen gelangen (post-directed, lay-by). Die Aufwandmengen betragen je nach Jahreszeit und Wachstumsstadium 0,1 bis 15 kg/ha und mehr, wobei sich die höheren Dosen besonders zur totalen Bekämpfung von Vegetationen eignen.

In Anbetracht der Vielseitigkeit der Applikationsmethoden können die erfindungsgemäßen Mittel oder diese enthaltende Mischungen außer bei den in den Tabellen aufgeführten Nutzpflanzen noch in einer weiteren großen Zahl von Kulturen zur Beseitigung unerwünschten Pflanzenwuchses eingesetzt werden.

Im einzelnen seien folgende Nutzpflanzen genannt:

| Botanischer Name | Deutscher Name | Englischer Name |
| --- | --- | --- |
| Allium cepa | Küchenzwiebel | onions |
| Ananas comosus | Ananas | pineapple |
| Arachis hypogaea | Erdnuß | peanuts (groundnuts) |
| Asparagus officinalis | Spargel | asparagus |
| Aventa sativa | Hafer | oats |
| Beta vulgaris spp. altissima | Zuckerrübe | sugarbeets |
| Beta vulgaris spp. rapa | Futterrübe | fooder beets |
| Beta vulgaris spp. esculenta | Rote Rübe | table beets, red beets |
| Brassica napus var. napus | Raps | rape |
| Brassica napus var. napobrassica | Kohlrübe | |
| Brassica napus var. rapa | Weiße Rübe | turnips |
| Brassica napus var. silvestris | Rübsen | |
| Camellia sinensis | Teestrauch | tea plants |
| Carthamus tinctorius | Saflor-Färbedistel | safflower |
| Carya illinoinensis | Pekannußbaum | pecan trees |
| Citrus limon | Zitrone | lemon |
| Citrus maxima | Pampelmuse | grapefruits |
| Citrus reticulata | Mandarine | |
| Citrus sinensis | Apfelsine, Orange | orange trees |
| Coffea arabica (Coffea canephora, Coffea liberica) | Kaffee | coffee plants |
| Cucumis melo | Melone | melons |
| Cucumis sativus | Gurke | cucumber |
| Cynodon dactylon | Bermudagras | Bermudagrass in turfs and lawns |
| Daucus carota | Möhre | carrots |
| Elaeis guineensis | Ölpalme | oil palms |
| Fragaria vesca | Erdbeere | strawberries |
| Glycine max | Sojabohne | soybeans |
| Gossypium hirsutum (Gossypium arboreum Gossypium herbaceum Gossypium vitifolium) | Baumwolle | cotton |
| Helianthus annuus | Sonnenblume | sunflowers |

Fortsetzung

| Botanischer Name | Deutscher Name | Englischer Name |
|---|---|---|
| Helianthus tuberosus | Topinambur | |
| Hevea brasiliensis | Parakautschukbaum | rubber plants |
| Hordeum vulgare | Gerste | barley |
| Humulus lupulus | Hopfen | hop |
| Ipomoea batatas | Süßkartoffeln | sweet potato |
| Juglans regia | Walnußbaum | walnut trees |
| Lactuca sativa | Kopfsalat | lettuce |
| Lens culinaris | Linse | lentils |
| Linum usitatissimum | Faserlein | flax |
| Lycopersicon lycopersicum | Tomate | tomato |
| Malus spp. | Apfel | apple trees |
| Manihot esculenta | Maniok | cassava |
| Medicago sativa | Luzerne | alfalfa (lucerne) |
| Mentha piperita | Pfefferminze | peppermint |
| Musa spp. | Obst- und Mehlbanane | banana plants |
| Nicotiana tabacum (N. rustica) | Tabak | tabacco |
| Olea europaea | Ölbaum | olive trees |
| Oryza sativa | Reis | rice |
| Panicum miliaceum | Rispenhirse | |
| Phaseolus lunatus | Mondbohne | limabeans |
| Phaseolus mungo | Erdbohne | mungbeans |
| Phaseolus vulgaris | Buschbohnen | snapbeans, green beens, dry beans |
| Pennisetum glaucum | Perl- oder Rohrkolbenhirse | |
| Petroselinum crispum spp. tuberosum | Wurzelpetersilie | parsley |
| Picea abies | Rotfichte | Norway spruce |
| Abies alba | Weißtanne | fire |
| Pinus spp. | Kiefer | pine trees |
| Pisum sativum | Gartenerbse | English peas |
| Prunus avium | Süßkirsche | cherry trees |
| Prunus domestica | Pflaume | plum trees |
| Prunus persica | Pfirsich | peach trees |

Fortsetzung

| Botanischer Name | Deutscher Name | Englischer Name |
|---|---|---|
| Pyrus communis | Birne | pear trees |
| Ribes sylvestre | Rote Johannisbeere | red currants |
| Ribes uva-crispa | Stachelbeere | |
| Ricinus communis | Rizinus | |
| Saccharum officinarum | Zuckerrohr | sugar cane |
| Secale cereale | Roggen | rye |
| Sesamum indicum | Sesam | Sesame |
| Solanum tuberosum | Kartoffel | Irish potato |
| Sorghum bicolor (s. vulgare) | Mohrenhirse | sorghum |
| Sorghum dochna | Zuckerhirse | |
| Spinacia oleracea | Spinat | spinach |
| Theobroma cacao | Kakaobaum | cacao plants |
| Trifolium pratense | Rotklee | red clover |
| Triticum aestivum | Weizen | wheat |
| Vaccinium carymbosum | Kulturheidelbeere | blueberry |
| Vaccinium vitis-idaea | Preißelbeere | cranberry |
| Vicia faba | Pferdebohnen | tick beans |
| Vigna sinensis (V. unguiculata) | Kuhbohne | cow peas |
| Vitis vinifera | Weinrebe | grapes |
| Zea mays | Mais | Indian corn, sweet corn, maize |

**Die neuen m-Anilidurethane können unter sich und mit zahlreichen Vertretern anderer herbizider oder wachstumsregulierender Wirkstoffgruppen gemischt und gemeinsam ausgebracht werden. Beispielsweise kommen als Mischungskomponenten Diazine, N-Phenyl-carbamate, Thiolcarbamate, Diurethane, Halogencarbonsäuren, Phenoxyfettsäuren, Triazine, Amide, Harnstoffe, Diphenyläther, Triazone, Uracile, Benzofuranderivate und andere in Betracht. Solche Kombinationen dienen zur Verbreiterung des Wirkungsspektrums und erzielen zuweilen synergistische Effekte.**

**Außerdem ist es nützlich, die neuen erfindungsgemäßen Verbindungen allein oder in Kombinationen mit anderen Herbiziden auch noch mit weiteren Pflanzenschutzmitteln gemischt gemeinsam auszubringen, beispielsweise mit Mitteln zur Bekämpfung von Schädlingen oder phytopatogenen Pilzen bzw. Bakterien. Von Interesse sind ferner die Mischbarkeit mit Mineralstofflösungen, welche zur Behebung von Ernährungs- oder Spurenelementmängeln eingesetzt werden. Zu den Einzelwirkstoffen oder Mischungen können auch Öle verschiedenen Typs, Netz- oder Haftmittel sowie Antischaummittel zugesetzt werden.**

**Die folgenden Tabellen geben die Ergebnisse biologischer Prüfungen wieder. Die Tabelle 1 dient zur Charakterisierung der Versuchspflanzen durch Wiedergabe der botanischen und der entsprechenden deutschen und englischen Bezeichnungen.**

Tabelle 1

Liste der Pflanzennamen

| Botanischer Name | Deutscher Name | Englischer Name |
|---|---|---|
| Amaranthus retroflexus | Zurückgekrümmter Fuchsschwanz | redroot pigweed |
| Arachys hypogaea | Erdnuß | peanuts (groundnuts) |
| Beta vulgaris | Zuckerrübe | sugarbeets |
| Cassia tora | | |
| Centaurea cyanus | Kornblume | cornflower |
| Chenopodium album | Weißer Gänsefuß | lambsquarters (goosefoot) |
| Cyperus ferax | | |
| Echinochloa crus galli | Hühnerhirse | barnyardgrass |
| Euphorbia geniculata | Südam. Wolfsmilchart | Southamerican member of the spurge family |
| Glycine max | Sojabohne | soybeans |
| Gossypium hirsutum | Baumwolle | cotton |
| Hordeum vulgare | Gerste | barley |
| Ipomoea spp. | Prunkwindearten | morningglory |
| Lamium spp. | Taubnesselarten | dead-nettle |
| Matricaria spp. | Kamillearten | chamomille |
| Oryza sativa | Reis | rice |
| Polygonum persicaria | Flohknöterich | ladystumb |
| Sesbanin exaltata | Turibaum | hemp sesbania (coffeeweed) |
| Sinapis alba | weißer Senf | white mustard |
| Sorghum bicolor | Mohrenhirse | wild cane (grain sorghum) |
| Triticum aestivum | Weizen | wheat |
| Zea mays | Mais | Indian corn |
| Mentha piperita | Pfefferminze | peppermint |
| Galium aparine | Klettenlabkraut | catchweed bedstraw |

Tabelle 2

Herbizide Wirkung neuer Verbindungen bei Vorauflaufanwendung im Gewächshaus

| Wirkstoff-Nummer | kg/ha a. S. | Testpflanze: Sinapis alba % Schädigung |
|---|---|---|
| 157 | 3,0 | 100 |
| 57 | 3,0 | 80 |
| 1 | 3,0 | 100 |
| 149 | 3,0 | 90 |
| 5 | 3,0 | 90 |
| 40 | 3,0 | 100 |
| 3 | 3,0 | 100 |
| 6 | 3,0 | 100 |
| 41 | 3,0 | 90 |
| 12 | 3,0 | 100 |
| 32 | 3,0 | 80 |
| 38 | 3,0 | 100 |
| 28 | 3,0 | 100 |
| 60 | 3,0 | 100 |
| 17 | 3,0 | 90 |
| 89 | 3,0 | 90 |
| 53 | 3,0 | 90 |
| 65 | 3,0 | 90 |
| 52 | 3,0 | 90 |
| 70 | 3,0 | 80 |
| 133 | 3,0 | 100 |
| 4 | 3,0 | 100 |
| 71 | 3,0 | 90 |
| 61 | 3,0 | 100 |
| 120 | 3,0 | 100 |
| 117 | 3,0 | 90 |
| 2 | 3,0 | 100 |
| 168 | 3,0 | 90 |

Fortsetzung

| Wirkstoff-Nummer | kg/ha a. S. | Testpflanze: Sinapis alba % Schädigung |
|---|---|---|
| 99 | 3,0 | 90 |
| 94 | 3,0 | 90 |
| 150 | 3,0 | 90 |
| 128 | 3,0 | 90 |
| 36 | 3,0 | 100 |
| 193 | 3,0 | 100 |
| 131 | 3,0 | 100 |
| 178 | 3,0 | 100 |
| 179 | 3,0 | 100 |
| 136 | 3,0 | 100 |
| 152 | 3,0 | 100 |
| 202 | 3,0 | 90 |
| 113 | 3,0 | 100 |
| 172 | 3,0 | 90 |
| 158 | 3,0 | 100 |
| 160 | 3,0 | 100 |
| 205 | 3,0 | 90 |
| 66 | 3,0 | 80 |
| 15 | 3,0 | 90 |
| 112 | 3,0 | 90 |
| 142 | 3,0 | 100 |
| 204 | 3,0 | 80 |

Tabelle 3

Herbizide Wirkung neuer Verbindungen bei Nachauflaufanwendung im Gewächshaus

| Wirkstoff-Nummer | kg/ha a. S. | Testpflanze und % Schädigung | |
|---|---|---|---|
| | | Centaurea cyanus | Ipomoea spp. |
| 57 | 3,0 | 90 | 100 |
| 1 | 3,0 | 100 | 100 |
| 85 | 3,0 | 70 | 100 |
| 17 | 3,0 | 90 | 90 |
| 89 | 3,0 | 100 | 100 |
| 53 | 3,0 | 100 | 100 |
| 65 | 3,0 | 90 | 100 |
| 58 | 3,0 | 100 | 100 |
| 50 | 3,0 | 100 | 100 |
| 70 | 3,0 | 60 | 90 |
| 71 | 3,0 | 90 | 100 |
| 61 | 3,0 | 60 | 100 |
| 67 | 3,0 | 90 | 100 |
| 82 | 3,0 | – | 100 |
| 106 | 3,0 | 100 | 100 |
| 120 | 3,0 | 100 | 100 |
| 90 | 3,0 | 100 | 90 |
| 94 | 3,0 | 100 | 100 |
| 119 | 3,0 | – | 100 |
| 168 | 3,0 | – | 100 |
| 159 | 3,0 | 100 | 60 |
| 179 | 3,0 | 100 | 100 |
| 136 | 3,0 | 100 | 100 |
| 97 | 3,0 | 80 | 100 |
| 125 | 3,0 | 100 | 90 |
| 191 | 3,0 | 100 | – |
| 160 | 3,0 | 100 | 70 |
| 146 | 3,0 | 90 | 80 |

Tabelle 3 (Fortsetzung)

| Wirkstoff-Nummer | kg/ha a. S. | Testpflanze und % Schädigung | |
|---|---|---|---|
| | | Centaurea cyanus | Ipomoea spp. |
| 204 | 3,0 | 100 | – |
| 193 | 3,0 | 100 | 100 |
| 187 | 3,0 | 100 | 100 |
| 218 | 3,0 | 100 | 90 |
| 216 | 3,0 | 100 | 100 |
| 217 | 3,0 | 90 | 80 |

Tabelle 4

Selektive Bekämpfung unerwünschter Pflanzen in Sojabohnen und Baumwolle bei Nachauflaufanwendung im Gewächshaus

| Wirkstoff-Nummer | | kg/ha a. S. | Testpflanzen und % Schädigung Glycine cine max | Gossypium-hirsutum | Oryza sativa | Amaranthus-retroflexus | Chenopodium-album | Euphorbia geniculata | Sesbania exaltata |
|---|---|---|---|---|---|---|---|---|---|
| 52 | | 0,5 | 15 | 0 | 0 | 100 | 100 | 100 | 98 |
| 77 | | 0,5 | – | 15 | 0 | 80 | – | – | 80 |
| | 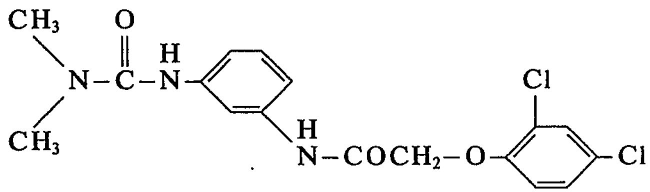 DE-AS 1793 226 | 0,5 | 90 | 8 | 10 | 0 | 100 | – | 100 |
| | 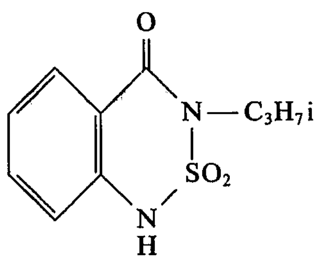 DE-PS 1542 836 | 0,5 | 0 | 33 | 6 | 35 | 72 | 0 | 44 |
| 65 | | 1,0 | – | 5 | 0 | 100 | 95 | 100 | 95 |
| 71 | | 0,5 | – | 0 | 0 | 100 | 98 | 100 | – |
| 89 | | 0,5 | – | 0 | – | 100 | 100 | 100 | 100 |
| 58 | | 1,0 | – | 5 | 15 | 100 | 100 | 100 | 80 |
| 57 | | 1,0 | – | 0 | 10 | 100 | 80 | 100 | 90 |
| 70 | | 2,0 | – | 5 | 10 | 100 | 100 | 100 | 95 |

Fortsetzung

| Wirkstoff-Nummer | kg/ha a. S. | Testpflanzen und % Schädigung Glycine cine max | Gossy-pium-hirsutum | Oryza sativa | Amaran-thus-retro-flexus | Cheno-podium-album | Euphor-bia genicu-lata | Sesbania exaltata |
|---|---|---|---|---|---|---|---|---|
| 85 | 1,0 | – | 5 | 15 | 100 | 98 | 100 | 90 |
| 67 | 1,0 | – | 0 | 0 | 100 | 98 | 100 | 95 |
| 50 | 0,5 | – | 10 | 10 | 100 | 98 | 100 | 80 |
| 80 | 1,0 | – | 10 | – | 100 | 100 | 100 | 90 |

Tabelle 5

Selektive Beseitigung von unerwünschten Pflanzen bei Nachauflaufwendung im Gewächshaus

| Wirkstoff-Nummer | kg/ha a. S. | Testpflanzen und % Schädigung Ara-chys-hypo-gaea | Hordeum vulgare | Triti-cum-aestivum | Amaran-thus-retroflexus | Cheno-podium-album | Lamium spp. | Sesbania-exaltata |
|---|---|---|---|---|---|---|---|---|
| 3 | 0,25 | 6 | 5 | 6 | 100 | 100 | 100 | 88 |
| 4 | 0,25 | 20 | 20 | 0 | 100 | 99 | 85 | 80 |
| 28 | 1,0 | 0 | 0 | 0 | 100 | 90 | 100 | 80 |
| 6 | 0,25 | 15 | – | 0 | 100 | 100 | 100 | – |
| 41 | 1,0 | – | 0 | 0 | 100 | 98 | 100 | 80 |
| 25 | 0,5 | 0 | – | 0 | 100 | 100 | 100 | 80 |
| 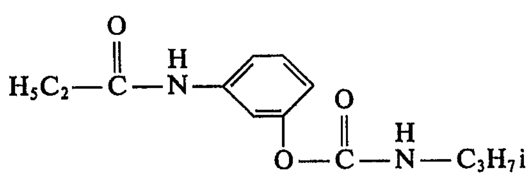 | 0,5 | 4 | 27 | 33 | 65 | 37 | 100 | 82 |
| US-PS 3 972 202 | 1,0 | 11 | 30 | 40 | 70 | 45 | 100 | 100 |

Tabelle 6

Weiteres Beispiel zur selektiven Bekämpfung unerwünschter Pflanzen bei Nachauflaufanwendung im Gewächshaus

| Wirkstoff-Nummer | kg/ha a. S. | Testpflanzen und % Schädigung | | | | | | |
|---|---|---|---|---|---|---|---|---|
| | | Gossypium hirsutum | Oryza sativa | Zea mays | Cassia tora | Cyperus ferax | Matricaria spp. | Sesbania exaltata |
| 3 | 0,25 | 23 | 18 | 16 | 100 | 70 | 82 | – |
| | 0,5 | 24 | 24 | 25 | 100 | 86 | 82 | 92 |
| 133 | 0,5 | 0 | 20 | 10 | – | 95 | 100 | 100 |
| 60 | 2,0 | 8 | 10 | 15 | – | 85 | 100 | 100 |

Tabelle 7

Selektive Beseitigung von Unkräutern in Zuckerrüben und Kultursorghum bei Nachauflaufanwendung im Gewächshaus

| Wirkstoff-Nummer | kg/ha a. S. | Testpflanzen und % Schädigung | | | |
|---|---|---|---|---|---|
| | | Beta vulgaris | Sorghum bicolor | Lamium spp. | Polygonum persicaria |
| 174 | 2,0 | 0 | 10 | 80 | 100 |
| 157 | 1,0 | 0 | 15 | 100 | 100 |
| 60 | 2,0 | 0 | 10 | 100 | 100 |

Tabelle 8

Herbizide Wirkung bei Nachauflaufanwendung im Gewächshaus

| Wirkstoff-Nummer | kg/ha a. S. | Testpflanzen und % Schädigung | | |
|---|---|---|---|---|
| | | Euphorbia geniculate | Galium aparine | Mentha piperita |
| 166 | 3,0 | 90 | – | 90 |
| 128 | 3,0 | 90 | 80 | – |
| 150 | 3,0 | 100 | 70 | 80 |
| 2 | 3,0 | – | – | 100 |
| 148 | 3,0 | 100 | – | – |
| 101 | 3,0 | 80 | – | – |

Tabelle 9

Selektive herbizide Wirkung bei Nachauflaufanwendung im Gewächshaus

| Wirkstoff-Nummer | kg/ha a. S. | Testpflanzen und % Schädigung | | | |
|---|---|---|---|---|---|
| | | Triticum aestivum | Amaranthus retroflexus | Chenopodium spp. | Euphorbia geniculata |
| 148 | 1,0 | 15 | 100 | 98 | 86 |
| 120 | 0,5 | 10 | 95 | 80 | 90 |
| 150 | 1,0 | 0 | 100 | 100 | 98 |
| 128 | 0,5 | 0 | 100 | – | 98 |
| 178 | 0,5 | 5 | 95 | 95 | 89 |
| 113 | 0,5 | 10 | 98 | 98 | 100 |
| 172 | 1,0 | 0 | 100 | 98 | – |
| 36 | 0,5 | 0 | 100 | 80 | 98 |
| 112 | 0,5 | 10 | 100 | 98 | 100 |
| 158 | 0,5 | 5 | 100 | – | 80 |
| 203 | 0,5 | 10 | 100 | 98 | 100 |
| 131 | 1,0 | 10 | – | 98 | 80 |
| 142 | 0,5 | 0 | 100 | 98 | 90 |
| 117 | 1,0 | 10 | 100 | 98 | 82 |
| 166 | 1,0 | 0 | 100 | – | 100 |
| 1 | 0,5 | 10 | 93 | 95 | 100 |
| 17 | 1,0 | 0 | 100 | 80 | – |
| 2 | 0,5 | 10 | 100 | 98 | 100 |
| 15 | 1,0 | 0 | 100 | 95 | – |
| 82 | 1,0 | 0 | – | 90 | 100 |
| 152 | 0,5 | 5 | 100 | 100 | 100 |

0 = ohne Schädigung.
100 = Pflanzen völlig abgetötet.

**Beispiel 6**

**Man vermischt 90 Gew.-Teile der Verbindung 1 mit 10 Gew.-Teilen N-Methyl-alpha-pyrrolidon und erhält eine Lösung, die zur Anwendung in Form kleinster Tropfen geeignet ist.**

Beispiel 7

20 Gew.-Teile der Verbindung 2 werden in einer Mischung gelöst, die aus 80 Gew.-Teilen Xylol, 10 Gew.-Teilen des Anlagerungsproduktes von 8 bis 10 Mol Äthylenoxid an 1 Ölsäure-N-monoäthanolamid, 5 Gew.-Teilen Calciumsalz der Dodecylbenzolsulfonsäure und 5 Gew.-Teilen des Anlagerungsproduktes von 40 Mol Äthylenoxid an 1 Mol Ricinusöl besteht. Durch Ausgießen und feines Verteilen der Lösung in 100 000 Gew.-Teilen Wasser erhält man eine wäßrige Dispersion, die 0,02 Gew.-% des Wirkstoffs enthält.

Beispiel 8

20 Gew.-Teile der Verbindung 3 werden in einer Mischung gelöst, die aus 40 Gew.-Teilen Cyclohexanon, 30 Gew.-Teilen Isobutanol, 20 Gew.-Teilen des Anlagerungsproduktes von 7 Mol Äthylenoxid an 1 Mol Isooctylphenol und 10 Gew.-Teilen des Anlagerungsproduktes von 0 Mol Äthylenoxid an 1 Mol Ricinusöl besteht. Durch Eingießen und feines Verteilen der Lösung in 100 000 Gew.-Teilen Wasser erhält man eine wäßrige Dispersion, die 0,02 Gew.-% des Wirkstoffs enthält.

Beispiel 9

20 Gew.-Teile der Verbindung 1 werden in einer Mischung gelöst, die aus 25 Gew.-Teilen Cyclohexanon, 65 Gew.-Teilen einer Mineralölfraktion vom Siedepunkt 210 bis 280°C und 10 Gew.-Teilen des Anlagerungsproduktes von 40 Mol Äthylenoxid an 1 Mol Ricinusöl besteht. Durch Eingießen und feines Verteilen der Lösung in 100 000 Gew.-Teilen Wasser erhält man eine wäßrige Dispersion, die 0,02 Gew.-% des Wirkstoffs enthält.

Beispiel 10

20 Gew.-Teile des Wirkstoffs 2 werden mit 3 Gew.-Teilen des Natriumsalzes der Diisobutylnaphthalin-alpha-sulfonsäure, 17 Gew.-Teilen des Natriumsalzes einer Ligninsulfonsäure aus einer Sulfit-Ablauge und 60 Gew.-Teilen pulverförmigem Kieselsäuregel gut vermischt und in einer Hammermühle vermahlen. Durch feines Verteilen der Mischung in 20 000 Gew.-Teilen Wasser erhält man eine Spritzbrühe, die 0,1 Gew.-% des Wirkstoffs enthält.

Beispiel 11

3 Gew.-Teile der Verbindung 3 werden mit 97 Gew.-Teilen feinteiligem Kaolin innig vermischt. Man erhält auf diese Weise ein Stäubemittel, das 3 Gew.-% des Wirkstoffs enthält.

Beispiel 12

30 Gew.-Teile der Verbindung 4 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Beispiel 13

40 Gew.-Teile des Wirkstoffs 1 werden mit 10 Teilen Natriumsalz eines Phenolsulfonsäure-harnstoff-formaldehyd-Kondensats, 2 Teilen Kieselgel und 48 Teilen Wasser innig vermischt. Man erhält eine stabile wäßrige Dispersion. Durch Verdünnen mit 100 000 Gew.-Teilen Wasser erhält man eine wäßrige Dispersion, die 0,04 Gew.-% Wirkstoff enthält.

Beispiel 14

20 Teile des Wirkstoffs 2 werden mit 2 Teilen Calciumsalz der Dodecylbenzolsulfonsäure, 8 Teilen Fettalkohol-polyglykoläther, 2 Teilen Natriumsalz eines Phenolsulfonsäureharnstoff-formaldehyd-Kondensats und 68 Teilen eines paraffinischen Mineralöls innig vermischt. Man erhält eine stabile ölige Dispersion.

**Patentansprüche (für BE, CH, DE, FR, GB, IT, LU, NL, SE)**

1. m-Anilidurethane der allgemeinen Formel I

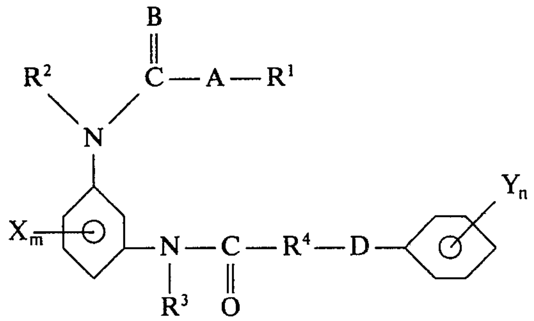

in der

A, B und D unabhängig voneinander Sauerstoff oder Schwefel
$R^1$ gegebenenfalls durch Halogen oder Alkoxy oder Alkoxy-carbonyl oder Cyan substituiertes Alkyl oder gegebenenfalls durch Halogen substituiertes Alkenyl oder gegebenenfalls durch Halogen oder Alkoxy substituiertes Alkinyl oder gegebenenfalls durch Alkyl substituiertes Cycloalkyl oder Aryl
$R^2$ und $R^3$ jeweils unabhängig voneinander Wasserstoff, Alkyl, Alkoxyalkyl, Halogenalkyl
$R^4$ einen gegebenenfalls durch Alkyl, Alkoxyalkyl oder Halogenalkyl substituierten Alkylenrest mit 1 bis 6 Kohlenstoffatomen
X Wasserstoff, Alkyl, Halogenalkyl, Alkoxy, Halogen, Nitro oder Amino
Y Wasserstoff, Alkyl, Halogenalkyl, Alkoxyalkyl, Cycloalkyl, Aralkyl, Halogen, eine Alkylenkette, die mit dem Benzolring zu einem gegebenenfalls substituierten Naphthylring kondensiert ist, Alkoxy, Halogenalkoxy, Alkylthio, Nitro, Aryl, Thiocyanato,

Cyano 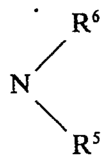 . 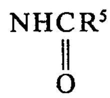 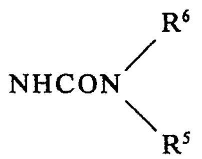 $COOR^5$ 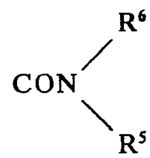

$SO_2R^5$ $OSO_2R^5$ $COR^5$ 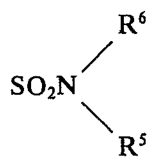

wobei $R^5$ und $R^6$ jeweils unabhängig voneinander
W Wasserstoff bedeutet oder die für $R^1$ genannte Bedeutung haben,
m die Zahlen 1—4 und n die Zahlen 1 bis 5 bedeuten.

2. Herbicid, gekennzeichnet durch einen Gehalt an einem m-Anilidurethan der Formel I.

3. Herbizid, gekennzeichnet durch einen Gehalt an einem festen oder flüssigen Trägerstoff und einem m-Anilidurethan der Formel I.

4. Verfahren zur Herstellung eines Herbizids, dadurch gekennzeichnet, daß man einen festen oder flüssigen Trägerstoff vermischt mit einem m-Anilidurethan der Formel I.

5. Verfahren zur Bekämpfung von unerwünschtem Pflanzenwuchs, dadurch gekennzeichnet, daß man die Pflanzen oder den Boden behandelt mit einem m-Anilidurethan der Formel I.

6. m-Anilidurethan, nämlich

1-(α-3-Chlorphenoxypropionsäure)-3-(O-Methylcarbamoyl)-anilid,
1-(α-4-Chlor-2-methylphenoxypropionsäure)-(3-S-Methylthiocarbamoyl)-anilid oder
1-(α-2,4-Dichlorphenoxypropionsäure)-3-(O-Methylcarbamoyl)-anilid.

7. Herbizid, gekennzeichnet durch einen Gehalt an einem m-Anilidurethan, nämlich

1-(α-3-Chlorphenoxypropionsäure)-3-(O-Methylcarbamoyl)-anilid,
1-(α-4-Chlor-2-methylphenoxypropionsäure)-(3-S-Methylthiocarbamoyl)-anilid oder
1-(α-2,4-Dichlorphenoxypropionsäure)-3-(O-Methylcarbamoyl)-anilid.

**Patentansprüche (für AT)**

1. Herbizid, gekennzeichnet durch einen Gehalt an einem m-Anilidurethan der allgemeinen Formel I

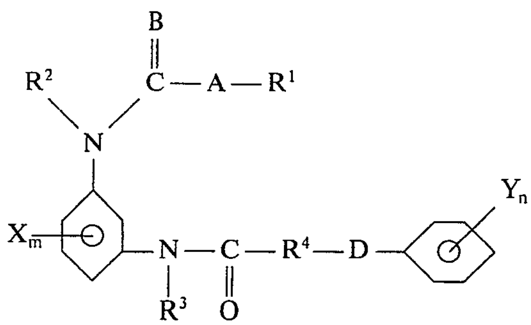

(I)

in der

A, B und D unabhängig voneinander Sauerstoff oder Schwefel
$R^1$ gegebenenfalls durch Halogen oder Alkoxy oder Alkoxy-carbonyl oder Cyan substituiertes Alkyl oder gegebenenfalls durch Halogen substituiertes Alkenyl oder gegebenenfalls durch Halogen oder Alkoxy substituiertes Alkinyl oder gegebenenfalls durch Alkyl substituiertes Cycloalkyl oder Aryl
$R^2$ und $R^3$ jeweils unabhängig voneinander Wasserstoff, Alkyl, Alkoxyalkyl, Halogenalkyl
$R^4$ einen gegebenenfalls durch Alkyl, Alkoxyalkyl oder Halogenalkyl substituierten Alkylenrest mit 1 bis 6 Kohlenstoffatomen
X Wasserstoff, Alkyl, Halogenalkyl, Alkoxy, Halogen, Nitro oder Amino
Y Wasserstoff, Alkyl, Halogenalkyl, Alkoxyalkyl, Cycloalkyl, Aralkyl, Halogen, eine Alkylenkette, die mit dem Benzolring zu einem gegebenenfalls substituierten Naphthylring kondensiert ist, Alkoxy, Halogenalkoxy, Alkylthio, Nitro, Aryl, Thiocyanato,

Cyano 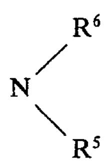 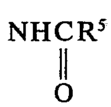 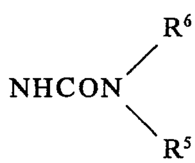 $COOR^5$ 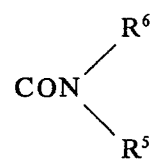

$SO_2R^5$ $OSO_2R^5$ $COR^5$ 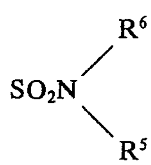

wobei $R^5$ und $R^6$ jeweils unabhängig voneinander
W Wasserstoff bedeutet oder die für $R^1$ genannte Bedeutung haben,
m die Zahlen 1—4 und n die Zahlen 1 bis 5 bedeuten.

2. Herbizid, gekennzeichnet durch einen Gehalt an einem festen oder flüssigen Trägerstoff und einem m-Anilidurethan der Formel I.

3. Verfahren zur Herstellung eines Herbizids, dadurch gekennzeichnet, daß man einen festen oder flüssigen Trägerstoff vermischt mit einem m-Anilidurethan der Formel I.

4. Verfahren zur Bekämpfung von unerwünschtem Pflanzenwuchs, dadurch gekennzeichnet, daß man die Pflanzen oder den Boden behandelt mit einem m-Anilidurethan der Formel I.

5. Herbizid, gekennzeichnet durch einen Gehalt an einem M-Anilidurethan, nämlich

1-(α-3-Chlorphenoxypropionsäure)-3-(O-Methylcarbamoyl)-anilid
1-(α-4-Chlor-2-methylphenoxypropionsäure)-(3-S-Methylthiocarbamoyl)-amilid oder
1-(α-2,4-Dichlorphenoxypropionsäure)-3-(O-Methylcarbamoyl)-anilid.

**Claims for the Contracting States BE, CH, DE, FR, GB, IT, LU, NL, SE**

1. An m-anilide-urethane of the general formula I

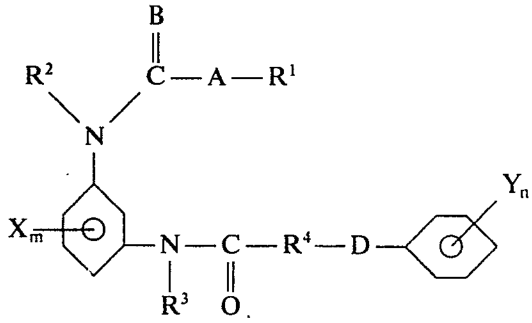

where A, B and D, independently of one another, denote oxygen or sulfur, $R^1$ denotes unsubstituted alkyl; alkyl substituted by halogen, alkoxy, alkoxycarbonyl or cyano; unsubstituted or halogen-substituted alkenyl; unsubstituted or halogen- or alkoxy-substituted alkynyl; or unsubstituted or alkyl-substituted cycloalkyl or aryl, $R^2$ and $R^3$, independently of one another, denote hydrogen, alkyl, alkoxyalkyl or haloalkyl, $R^4$ denotes alkylene of 1 to 6 carbon atoms which is unsubstituted or substituted by alkyl, alkoxyalkyl or haloalkyl, X denotes hydrogen, alkyl, haloalkyl, alkoxy, halogen, nitro or amino, Y denotes hydrogen, alkyl, haloalkyl, alkoxyalkyl, cycloalkyl, aralkyl, halogen, an alkylene chain fused with the benzene ring to give a substituted or unsubstituted naphthyl ring, Y further denotes alkoxy, haloalkoxy, alkylthio, nitro, aryl, thiocyanato, cyano,

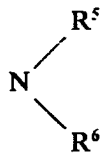 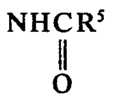 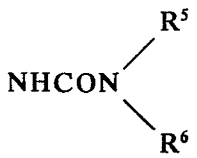 $COOR^5$ 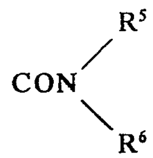

$SO_2R^5$ $OSO_2R^5$

$COR^5$ or 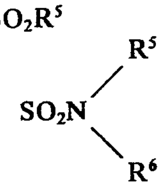

$R^5$ and $R^6$, independently of one another, denoting hydrogen or having the meanings given for $R^1$,
m denotes one of the integers 1, 2, 3 and 4, and
n denotes one of the integers 1, 2, 3, 4 and 5.

2. A herbicide characterized by a content of an m-anilide-urethane of the formula I.

3. A herbicide characterized by a content of a solid or liquid carrier and an m-anilide-urethane of the formula I.

4. A process for the production of a herbicide, characterized in that a solid or liquid carrier is mixed with an m-anilide-urethane of the formula I.

5. A process for controlling unwanted plant growth, characterized in that the plants or the soil are treated with an m-anilide-urethane of the formula I.

6. An m-anilide-urethane, namely 1-(α-3-chlorophenoxypropionic acid)-3-(O-methylcarbamoyl)-anilide, 1-(α-4-chloro-2-methylphenoxypropionic acid)-3-(S-methylthiocarbamoyl)-anilide or 1-(α-2,4-dichlorophenoxypropionic acid)-3-(O-methylcarbamoyl)-anilide.

7. A herbicide characterized by a content of an m-anilide-urethane, namely 1-( -3-chlorophenoxypropionic acid)-3-(O-methylcarbamoyl)-anilide, 1-(α-4-chloro-2-methylphenoxypropionic acid)-3-(S-methylthiocarbamoyl)-anilide or 1-(α-2,4-dichlorophenoxypropionic acid)-3-(O-methylcarbamoyl)-anilide.

**Claims for the Contracting state Austria**

1. A herbicide characterized by a content of an m-anilide-urethane of the general formula I

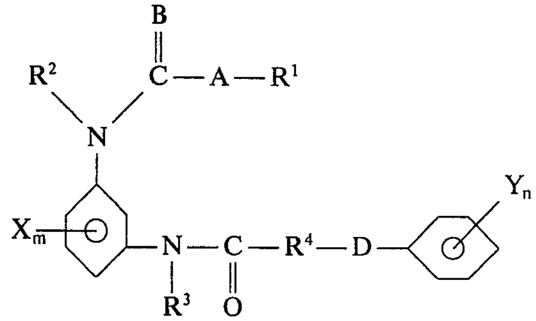

(I)

where A, B and D, independently of one another, denote oxygen or sulfur, $R^1$ denotes unsubstituted alkyl; alkyl substituted by halogen, alkoxy, alkoxycarbonyl or cyano; unsubstituted or halogen-substituted alkenyl; unsubstituted or halogen- or alkoxy-substituted alkynyl; or unsubstituted or alkyl-substituted cycloalkyl or aryl, $R^2$ and $R^3$, independently of one another, denote hydrogen, alkyl, alkoxyalkyl or haloalkyl, $R^4$ denotes alkylene of 1 to 6 carbon atoms which is unsubstituted or substituted by alkyl, alkoxyalkyl or haloalkyl, X denotes hydrogen, alkyl, haloalkyl, alkoxy, halogen, nitro or amino, Y denotes hydrogen, alkyl, haloalkyl, alkoxyalkyl, cycloalkyl, aralkyl, halogen, an alkylene chain fused with the benzene ring to give a substituted or unsubstituted naphthyl ring, Y further denotes alkoxy, haloalkoxy, alkylthio, nitro, aryl, thiocyanato, cyano,

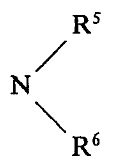 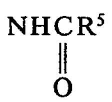 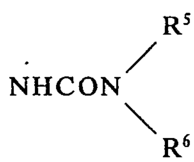 $COOR^5$ 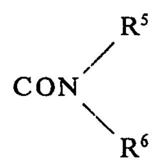

$SO_2R^5$ $OSO_2R^5$

$COR^5$ or 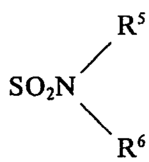

**$R^5$ and $R^6$, independently of one another, denoting hydrogen or having the meanings given for $R^1$,**
**m denotes one of the integers 1, 2, 3 and 4, and**
**n denotes one of the integers 1, 2, 3, 4 and 5.**

**2. A herbicide characterized by a content of a solid or liquid carrier and an m-anilide-urethane of the formula I.**

**3. A process for the production of a herbicide, characterized in that a solid or liquid carrier is mixed with an m-anilide-urethane of the formula I.**

**4. A process for controlling unwanted plant growth, characterized in that the plants or the soil are treated with an m-anilide-urethane of the furmula I.**

**5. A herbicide characterized by a content of an m-anilide-urethane, namely 1-(α-3-chlorophenoxy-propionic acid)-3-(O-methylcarbamoyl)-anilide, 1-(α-4-chloro-2-methylphenoxypropionic acid)-3-(S-methylthiocarbamoyl)-anilide or 1-(α-2,4-dichlorophenoxypropionic acid)-3-(O-methylcarbamoyl)-anilide.**

**Revendications pour les Etats Contractants BE, CH, DE, FR, GB, IT, LU, NL, SE**

1. m-anilidurethanes de formule générale I,

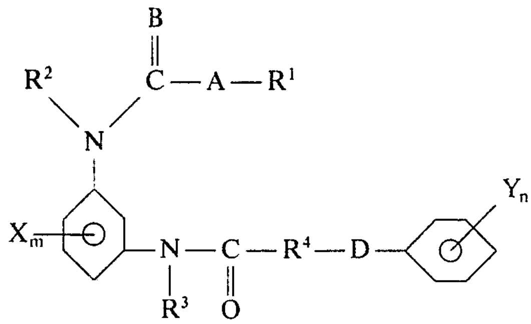

dans laquelle

A, B et D représentent, indépendamment l'un de l'autre, de l'oxygène ou du soufre
$R^1$ représente un alkyle, éventuellement substitué par halogène ao alcoxy ou alcoxy-carbonyle ou cyano, ou alcényle éventuellement substitué par un halogène, ou alcinyle éventuellement substitué par halogène ou alcoxy, ou cycloalkyle éventuellement substitué par alkyle, ou aryle
$R^2$ et $R^3$, chacun, indépendamment l'un de l'autre, hydrogène, alkyle, alcoxyalkyle, halogènalkyle,
$R^4$ un reste alkylène de 1 à 6 atomes de carbone éventuellement substitué par alkyle, alcoxyalkyle ou halogènalkyle,
X hydrogène, alkyle, halogènalkyle, alcoxy, halogène, nitro ou amino
Y hydrogène, alkyle, halogènalkyle, alcoxyalkyle, cycloalkyle, aralkyle, halogène, une chaîne alkylène qui est condensée avec le noyau benzène pour donner un noyau naphthyle éventuellement substitué, alcoxy, halogènalcoxy, alkylthio, nitro, arylthiocyanato, cyano,

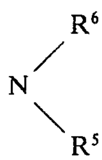 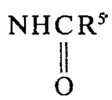 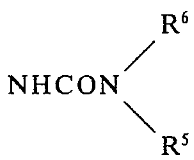 $COOR^5$ 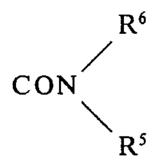

$SO_2R^5$ $OSO_2R^5$ $COR^5$ 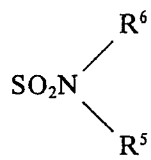

$R^5$ et $R^6$ représentant indépendamment l'un de l'autre, l'hydrogène, ou ayant les significations données pour $R^1$,
m, les nobres 1 à 4 et n les nobres 1 à 5.

2. Herbicide caractérisé par une teneur en une m-anilidurethane de formule I.
3. Herbicide caractérisé par une teneur en un support solide ou liquide et une m-anilidurethane de formule I.
4. Procédé de préparation d'un herbicide, caractérisé par le fait qu'on mélange un support solide ou liquide avec une m-anilidurethane de formule I.
5. Procédé de lutte contre la croissance indésirable des plantes, caractérisé par le fait qu'on traite les plantes ou le sol avec une m-anilidurethane de formule I.
6. m-anilidurethane, à savoir
anilide d'acide 1-(α-3-chlorophénoxypropionique) 3-(O-méthylcarbamoyl)
anilide d'acide 1-(α-4-chloro-2-méthylphénoxypropionique) (3-S-méthylthiocarbamoyl)
anilide d'acide 1-(α-2,4-dichlorophénoxypropionique) 3-(O-méthylcarbamoyl).

7. Herbicide caractérisé par une teneur en un

anilide d'acide 1-(α-3-chlorophénoxypropionique) 3-(O-méthylcarbamoyl)
anilide d'acide 1-(α-4-chloro-2-méthylphénoxypropionique) (3-S-méthylthiocarbamoyl)
anilide d'acide 1-(α-2,4-dichlorophénoxypropionique) 3-(O-méthylcarbamoyl).

**Revendications le' Etat contractant pour L'Autriche**

1. Herbicide caractérisé par une teneur en une m-anilidurethane de formule générale I,

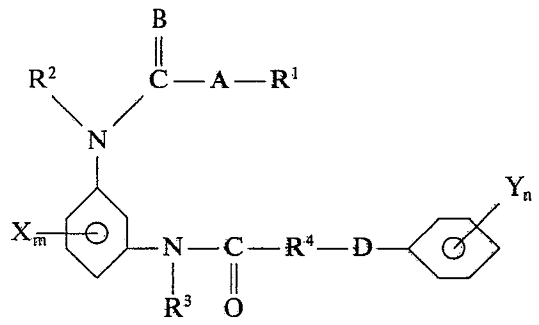

dans laquelle

A, B et D représentent, indépendamment l'un de l'autre, de l'oxygène ou du soufre
$R^1$ représente un alkyle, éventuellement substitué par halogène ou alcoxy ou alcoxy-carbonyle ou cyano, ou alcényle éventuellement substitué par un halogène, ou alcinyle éventuellement substitué par halogène ou alcoxy, ou cycloalkyle éventuellement substitué par alkyle, ou aryle
$R^2$ et $R^3$, chacun, indépendamment l'un de l'autre, hydrogène, alkyle, alcoxyalkyle, halogènalkyle,
$R^4$ un reste alkylène de 1 à 6 atomes de carbone éventuellement substitué par alkyle, alcoxyalkyle ou halogènalkyle,
X hydrogène, alkyle, halogènalkyle, alcoxy, halogène, nitro ou amino
Y hydrogène, alkyle, halogènalkyle, alcoxyalkyle, cycloalkyle, aralkyle, halogène, une chaîne alkylène qui est condensée avec le noyau benzène pour donner un noyau naphthyle éventuellement substitué, alcoxy, halogènalcoxy, alkylthio, nitro, arylthiocyanato, cyano,

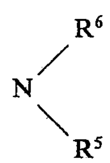 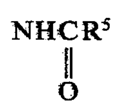 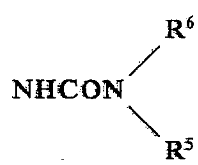 $COOR^5$ 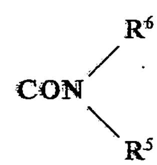

$SO_2R^5$ $OSO_2R^5$ $COR^5$ 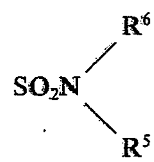

$R^5$ et $R^6$ représentant indépendamment l'un de l'autre, l'hydrogène, ou ayant les significations données pour $R^1$,
m, les nombres 1 à 4 et n les nombres 1 à 5.

2. Herbicide caractérisé par une teneur en un support solide ou liquide et une m-anilidurethane de furmule I.

3. Procédé de préparation d'un herbicide, caractérisé par le fait qu'on mélange un support solide ou liquide avec une m-anilidurethane de formule I.

4. Procédé de lutte contre la croissance indésirable des plantes, caractérisé par le fait qu'on traite les plantes ou le sol avec une m-anilidurethane de formule I.

5. Herbicide caractérisé par une teneur en un

anilide d'acide 1-(α-3-chlorophénoxypropionique) 3-(O-méthylcarbamoyl)
anilide d'acide 1-(α-4-chloro-2-méthylphénoxypropionique) (3-S-méthylthiocarbamoyl)
anilide d'acide 1-(α-2,4-dichlorophénoxypropionique) 3-(O-méthylcarbamoyl).